# EUROPÄISCHE PATENTSCHRIFT

(11) **EP 4 669 685 B1**
(45) Veröffentlichungstag und Bekanntmachung des Hinweises auf die Patenterteilung: **04.11.2026**
(21) Anmeldenummer: 24737330.1
(22) Anmeldetag: 19.06.2024
(51) Int. Cl.: C08G 18/10, C08G 18/24, C08G 18/38, C08G 18/75, C08G 18/76, G02B 1/04

(54) **VERFAHREN ZUR HERSTELLUNG EINES GLASKÖRPERS, GLASKÖRPER UND POLYMERISIERBARE MISCHUNG**
METHOD FOR PRODUCING A GLASS BODY, GLASS BODY AND POLYMERISABLE MIXTURE
PROCÉDÉ DE FABRICATION D'UN CORPS EN VERRE, CORPS EN VERRE ET MÉLANGE POLYMÉRISABLE

(30) Priorität: 20.06.2023 DE 102023002498
(43) Veröffentlichungstag der Anmeldung: 31.12.2025
(73) Patentinhaber: Rodenstock GmbH, 80687 München (DE)
(72) Erfinder: HARTL, Andreas, 81375 München (DE); TRAULSEN, Christoph, 81379 München (DE); ZINNER, Herbert, 85296 Rohrbach (DE)
(74) Vertreter: Wallinger Ricker Schlotter PartGmbB
(86) Internationale Anmeldenummer: PCT/DE2024/100548
(87) Internationale Veröffentlichungsnummer: WO 2024/260512

(56) Entgegenhaltungen:
- EP-A1- 4 400 524
- WO-A1-2012/147709
- CN-B- 114 276 770
- US-A1- 2021 380 747
- US-B2- 9 933 701

## Beschreibung

Die vorliegende Erfindung betrifft ein Verfahren zur Herstellung eines Glaskörpers.

Glaskörper, insbesondere Kunststofflinsen, bevorzugt Kunststoffbrillengläser, werden in der Regel aus einer polymerisierbaren Mischung bzw. Zusammensetzung hergestellt, welche häufig auch als Gießharz bezeichnet wird. Eine solche Zusammensetzung besteht in der Regel aus Kunststoffmonomeren und liegt als eine gießbare bzw. formbare Masse vor. Im Bereich der Kunststoffbrillengläser mit einem Brechungsindex von 1,6 oder größer sind insbesondere Poly(thio-)urethane aufgrund ihrer guten Materialeigenschaften weit verbreitet. Ein Poly(thio-)urethan-Gießharz besteht im Wesentlichen aus mehrwertigen Isocyanaten und Isocyanat-reaktiven Komponenten, worunter im allgemeinen mehrwertige Alkohole oder Thiole verstanden werden. Diese Gießharzmischung wird beispielsweise zur Herstellung einer Kunststofflinse in ein Volumen, ausgebildet zwischen zwei, in einem vorgegebenen Abstand zueinander angeordneten, formgebenden Formteilen, gegossen. Anschließend wird das Gebilde durch Energiezufuhr ausgehärtet, d.h. die polymerisierbare Zusammensetzung bzw. das Gießharz wird polymerisiert, wobei die hierfür erforderliche Energie in der Regel durch thermische Energie bereitgestellt wird. Auch in anderen Bereichen, wie zum Beispiel beim Versehen von Kunststofflinsen mit funktionellen Beschichtungen, insbesondere mit funktionellen Lacken, werden diese Lacke in der Regel als polymerisierbare Verbindungen auf die zu beschichtende Kunststofflinse aufgebracht, ehe ein thermisch induzierter Polymerisationsschritt stattfindet. Bei der Herstellung von Kunststoffbrillengläsern durch thermisch induzierte Polymerisationen muss große Sorgfalt in die gleichmäßige Verteilung der zugeführten thermischen Energie gelegt werden, da bei Missachtung dessen Produkte mit inhomogenen, oder im Falle einer Massenproduktion Produkte mit völlig unterschiedlichen Materialeigenschaften erhalten werden. Um diese Sorgfalt zu gewährleisten, werden aufwendige Umluftöfen mit langwierigen Heizprogrammen angewandt, welche über mehrere Stunden oder Tage andauern. Der Betrieb dieser Öfen über einen solch langen Zeitraum ist üblicherweise mit erheblichen Energiekosten verbunden.

US 9 933 701 B2 offenbart einen Photobasengenerator und ein photosensitives Harz aufweisend einen solchen Photobasengenerator, welcher insbesondere dort aufgezeigten Nachteile bei der Aushärtung von Epoxidharzen adressiert, es wird jedoch keine Verwendung von Vorpolymerisaten offenbart.

WO 2012 / 147 709 A1 offenbart eine aushärtbare Mischung, welche zur Verwendung als optischer Klebstoff in der Herstellung eines zusammengesetzten optischen Elements geeignet ist, wobei aushärtbare Mischung ein Polythiourethan-Oligomer, eine Episulfid-Komponente und einen Photobasengenerator aufweist. Es wird nicht gezeigt, dass der Photobasengenerator eine Reaktion zwischen dem Polythiourethan-Oligomer und den Isocyanaten ermöglicht.

CN 114 276 770 B offenbart ebenfalls einen Klebstoff, insbesondere einen mit UV-Strahlung aushärtbaren Klebstoff, wobei dieser Klebstoff u.a. zwischen 35 Gew.-% und 60 Gew.-% eines Thiol-modifizierten Epoxidharzes, eine Thiol-Komponente, eine Isocyanat-Komponente, einen Photobasengenerator und einen Photoinitiator bzw. Radikalgenerator aufweist. Es wird nicht gezeigt, dass ein Polythiourethan aus der aushärtbaren Mischung hergestellt wird, sondern es wird lediglich offenbart, eine alternative Aushärtemethode für Epoxidharze, insbesondere eine Methode zum Erhalt eines durch Thiourethan-Gruppen vernetzten Epoxidharzes. Es wird keine Verwendung eines Vorpolymerisats offenbart.

US 2021 / 380 747 A1 offenbart ebenfalls einen Klebstoff, insbesondere eine photoaushärtbare Mischung geeignet zur Verwendung als optischer Klebstoff in einer LCD-Anzeige, wobei dieser Klebstoff eine Epoxid-Komponente, eine AcrylEster-Komponente, eine Isocyanat-Komponente, einen Photobasengenerator und eine Komponente aufweisend eine Thiol-Gruppe aufweist. Auch hier wird nicht gezeigt, dass ein Polythiourethan aus der aushärtbaren Mischung hergestellt wird, sondern es wird lediglich die Herstellung eines Mischmaterials aufweisend Epoxidharz, Acrylat und Polythiourethan offenbart. Es wird keine Verwendung eines Vorpolymerisats offenbart.

Aufgabe der vorliegenden Erfindung ist es daher, ein Verfahren zum Herstellen eines Glaskörpers bereitzustellen, welches die oben genannten Nachteile überkommt. Die Aufgabe wird durch ein Verfahren mit den Merkmalen des Anspruchs 1 gelöst.

Eine Aufgabe kann auch in der Bereitstellung einer verbesserten polymerisierbaren Mischung bzw. Zusammensetzung gesehen werden, welche die oben genannten Nachteile überkommt. Diese Aufgabe wird durch eine (photo)polymerisierbare Mischung mit den Merkmalen des Anspruchs 9 gelöst. Entsprechend gelten die vorliegenden Erläuterungen und/oder Merkmale gleichermaßen für ein erfindungsgemäßes Verfahren und eine erfindungsgemäße (photo)polymerisierbare Mischung, auch wenn sie nur mit Bezug zu einem dieser Aspekte genannt sind.

Insbesondere wird auch die Verwendung einer hier beschriebenen polymerisierbaren Mischung in einem hier beschriebenen Verfahren bzw. die Verwendung einer hier beschriebenen polymerisierbaren Mischung zur Ausbildung eines hier beschriebenen Glaskörpers mit einem hier beschriebenen Verfahren unter Schutz gestellt. Bevorzugte Ausführungsformen sind Gegenstand der jeweiligen abhängigen Ansprüche.

Ein Aspekt betrifft ein Verfahren zur Herstellung eines Glaskörpers bzw. Halbzeugs aufweisend die folgenden Schritte:
S100: Bereitstellen eines Substrats;
S102: Bereitstellen einer polymerisierbaren Mischung zum Erhalt eines Poly(thio-)urethans, aufweisend eine Isocyanatkomponente und optional eine Thiolkomponente, wobei die polymerisierbare Mischung mindestens ein Poly(thio-)urethan Vorpolymerisat aufweist, ausgewählt aus:
   - Ein Poly(thio-)urethan Vorpolymerisat, hergestellt aus Isocyanaten und Isocyanat-reaktiven Komponenten, wobei das Verhältnis der beiden Komponenten derart ist, dass ein Überschuss an Isocyanat-reaktiven Gruppen im Vergleich zu Isocyanat Gruppen vorliegt;
      und/oder
Ein Poly(thio-)urethan Vorpolymerisat, hergestellt aus Isocyanaten und Isocyanat-reaktiven Komponenten, wobei das Verhältnis der beiden Komponenten derart ist, dass ein Überschuss an Isocyanat Gruppen im Vergleich zu Isocyanat-reaktiven Gruppen vorliegt; S104: Vermischen dieser polymerisierbaren Mischung mit mindestens einem weiteren Additiv, wobei dieses Additiv ein Photobasengenerator ist bzw. aufweist, zum Erhalt einer photopolymerisierbaren Mischung;
S106: Aufbringen der photopolymerisierbaren Mischung auf das Substrat;
S108: Aushärten der photopolymerisierbaren Mischung durch Belichten, insbesondere mittels UV-Licht, zum Ausbilden eines Halbzeugs bzw. Glaskörpers.

Vorzugsweise weist das Verfahren die Schritte S100, S102, S104, S106, S108 in dieser Reihenfolge auf.

In einem, insbesondere ersten, Verfahrensschritt S100 wird dabei ein Substrat bereitgestellt, worunter ein beliebiger Grundkörper bzw. Trägermaterial verstanden werden kann, auf dem mittels dieses Verfahrens das Angießen bzw. Beschichten bzw. Aufbringen einer polymerisierbaren Zusammensetzung erfolgt, welche nach entsprechender Aushärtung zum Erhalt eines Angusses bzw. einer Schicht bzw. eines Überfangs bzw. einer zusätzlichen Komponente bzw. einer zusätzlichen Lage auf dem Substrat führt.

Um insbesondere für eine späteren Verwendung als Linse tauglich zu sein, sollte der Grundkörper eine hinreichende optische Güte im Hinblick auf optische Abbildungseigenschaften besitzen. Der Fachmann versteht unter optischen Abbildungseigenschaften eine Vielzahl bestimmbarer, charakteristischer Größen, welche einen vorliegenden Gegenstand, wie insbesondere einen Grundkörper, hinsichtlich seiner optischen Abbildungseigenschaften charakterisieren können, worunter Eigenschaften wie beispielsweise die spektrale Transmission, Farbwiedergabe bzw. die Abbe-Zahl zählen. Insbesondere in der Verwendung von Kunststoffen als Materialien zur Herstellung von Linsen, insbesondere von ophthalmischen Linsen bzw. Brillengläsern, haben sich in den letzten Jahren Materialien wie Poly(thio-)urethan, Polymethylmethacrylat, Polycarbonat, Polyacrylat, Polydiethylenglycolbisallylcarbonat oder Kombinationen hiervon als bevorzugt herausgestellt, wobei prinzipiell auch andere transparente Kunststoffmaterialien verwendet werden können.

In einem weiteren, insbesondere zweiten, Verfahrensschritt S102 wird eine polymerisierbare Mischung aus Isocyanaten und Isocyanat-reaktiven Komponenten bereitgestellt. Um aus diesen Komponenten eine polymerisierbare Mischung zu erhalten, müssen die jeweiligen Komponenten zwei oder mehrere ihrer namensgebenden funktionellen Gruppen aufweisen. Mit anderen Worten weist die Isocyanat Komponente zwei oder mehrwertige Isocyanate auf, bevorzugt Diisocyanate, und die Isocyanat-reaktive Komponente weist zumindest Thiole oder Alkohole mit zwei oder mehreren funktionellen Gruppen, d.h. SH- oder OH-Gruppen, auf. Die bereitgestellte polymerisierbare Mischung weist zumindest zwei der folgenden Komponenten auf:
Die polymerisierbare Mischung weist mindestens ein Poly(thio-)urethan Vorpolymerisat auf, hergestellt aus Isocyanaten und Isocyanat-reaktiven Komponenten, wobei das Verhältnis der beiden Komponenten derart gewählt ist bzw. wurde, dass ein Überschuss an Isocyanat-reaktiven Gruppen im Verhältnis zu Isocyanat Gruppen vorliegt bzw. vorlag. Bei dem bereitgestellten Vorpolymerisat handelt es sich um eine Zusammensetzung, welche eine erste Vor-Polymerisation aufweist, wobei diese insbesondere dadurch gekennzeichnet ist, dass Isocyanat-reaktive Gruppen in einem definierten Überschuss zugegeben wurden. Das Vorpolymerisat besitzt dadurch noch viele reaktive Gruppen, welche in einem weiterem Verfahrensschritt zur Polymerisation genutzt werden können. Ein solches Vorpolymerisat wird in der Regel durch Zuführen von thermischer Energie gebildet, d.h. die Vorpolymerisation wurde thermisch induziert, vorzugsweise wird hierbei die polymerisierbare Mischung aufweisend Isocyanat Komponenten und Isocyanat-reaktive Komponenten unter ständigem Rühren in einem dafür üblichen Behältnis oder Reaktor erhitzt, in Weiterbildung findet eine Beschleunigung durch Zugabe eines Metallkatalysators statt. Vorzugsweise weist die polymerisierbare Mischung ein Poly(thio-)urethan Vorpolymerisat auf, hergestellt aus Isocyanaten und Isocyanat-reaktiven Komponenten, wobei das Verhältnis der beiden Komponenten derart gewählt ist bzw. wurde, dass der Überschuss an Isocyanat-reaktiven Gruppen im Verhältnis zu Isocyanat Gruppen vorliegt bzw. vorlag, und der Anteil der in der polymerisierbaren Mischung vorhandenen Isocyanat Gruppen höchstens etwa 50 %, bevorzugt höchstens etwa 30 %, der in der Mischung vorhandenen Isocyanat-reaktiven Gruppen entspricht. Vorteilhafterweise weist das Vorpolymerisat durch den verwendeten Überschuss an Isocyanat-reaktiven Komponenten noch viele Isocyanat-reaktive Gruppen auf, welche in einem weiteren Verfahrensschritt zur Polymerisation genutzt werden können.

Alternativ oder zusätzlich weist die polymerisierbare Mischung ein Poly(thio-)urethan Vorpolymerisat auf, hergestellt aus Isocyanaten und Isocyanat-reaktiven Komponenten, wobei das Verhältnis der beiden Komponenten derart gewählt ist bzw. wurde, dass ein Überschuss an Isocyanat Gruppen im Verhältnis zu Isocyanat-reaktiven Gruppen vorliegt bzw. vorlag. Bei dem bereitgestellten Vorpolymerisat handelt es sich um eine Zusammensetzung, welche eine erste Vor-Polymerisation aufweist, wobei diese insbesondere dadurch gekennzeichnet ist, dass Isocyanat Gruppen in einem definierten Überschuss zugegeben wurden. Das Vorpolymerisat besitzt dadurch noch viele reaktive Gruppen, welche in einem weiterem Verfahrensschritt zur Polymerisation genutzt werden können. Ein solches Vorpolymerisat wird in der Regel durch Zuführen von thermischer Energie gebildet, d.h. die Vorpolymerisation wurde thermisch induziert, vorzugsweise wird hierbei die polymerisierbare Mischung aufweisend Isocyanat Komponenten und Isocyanat-reaktive Komponenten unter ständigem Rühren in einem dafür üblichen Behältnis oder Reaktor erhitzt, in Weiterbildung findet eine Beschleunigung durch Zugabe eines Metallkatalysators statt. Vorzugsweise weist die polymerisierbare Mischung ein Poly(thio-)urethan Vorpolymerisat auf, hergestellt aus Isocyanaten und Isocyanat-reaktiven Komponenten, wobei das Verhältnis der beiden Komponenten derart gewählt ist bzw. wurde, dass der Überschuss an Isocyanat Gruppen im Verhältnis zu Isocyanat-reaktiven Gruppen vorliegt bzw. vorlag, und der Anteil der in der polymerisierbaren Mischung vorhandenen Isocyanat-reaktiven Gruppen höchstens etwa 50%, bevorzugt höchstens etwa 30%, der in der Mischung vorhandenen Isocyanat Gruppen entspricht. Vorteilhafterweise weist das Vorpolymerisat durch den verwendeten Überschuss an Isocyanat Komponenten noch viele Isocyanat- Gruppen auf, welche in einem weiteren Verfahrensschritt zur Polymerisation genutzt werden können.

Das Einbringen sogenannter Vorpolymerisate bzw. Vorpolymere in die polymerisierbare Mischung zum Erhalt eines Poly(thio-)urethans, auch bezeichnet als Poly(thio-)urethan-Gießharzmischung, erhöht in Kombination mit einem Photobasengenerator in einer photopolymerisierbaren Mischung den Aushärtungsgrads der durch Licht induzierten Polymerisation und vorteilhafterweise die optische Qualität des erhaltenen Glaskörpers, insbesondere durch eine verminderte Neigung zur Schlierenbildung, verbessern. Auch lässt sich die Viskosität der polymerisierbaren Mischung über den Anteil an Vorpolymerisaten gezielt steuern bzw. beeinflussen. Vorteilhafterweise lässt sich durch gezielte Verwendung bzw. Zugabe solcher Vorpolymerisate die Viskosität einer polymerisierbaren Mischung, insbesondere im Hinblick auf die Eignung einer solchen polymerisierbaren Mischung zur Aufbringung mittels eines Spincoatings- bzw. Schleuderbeschichtungs- bzw. Rotationsbeschichtungsverfahrens gezielt beeinflussen, insbesondere erhöhen, um durch eine erhöhte bzw. gesteigerte Viskosität einen verbesserten Auftrag zu erreichen. Solche Vorpolymerisate können durch eine thermisch induzierte Vorpolymerisation mit einem großen Überschuss einer reaktiven Komponente (Diisocyanate oder Polythiole/Polyole) erzeugt werden.

Mit anderen Worten weist die bereitgestellte polymerisierbare Mischung mindestens ein Poly(thio-)urethan Vorpolymerisat auf, wobei dieses Vorpolymerisat wahlweise ein Vorpolymerisat aufweisend einen Isocyanat-Überschuss oder ein Vorpolymerisat aufweisend einen Überschuss an Isocyanat-reaktiven Gruppen ist bzw. aufweist, in Weiterbildung hiervon weist die polymerisierbare Mischung beide Arten von Vorpolymerisaten auf.

Alternativ (oder zusätzlich) weist die polymerisierbare Mischung mindestens Isocyanat-reaktive Komponente bzw. Thiolkomponente auf, bevorzugt weist die polymerisierbare Mischung zwei oder mehrere Thiolkomponenten auf.

Vorzugsweise ist eine solche Thiolkomponente ausgewählt aus einer der Verbindungen Pentaerythrit-tetrakis-(3-mercapto-propionat), 4-(Mercaptomethyl)-1,8-dimercapto-3,6-dithiaoctan oder 4,8-dimercaptomethyl-1,11-dimercapto-3,6,9-trithiaundecan. Insbesondere kann die polymerisierbare Mischung nicht nur eine Thiolkomponente aus den vorstehend genannten Verbindungen aufweisen, sondern auch zwei oder mehrere, wobei sich die ausgewählten Thiolkomponenten insbesondere auch unterscheiden können. Insbesondere in Verbindung mit einer polymerisierbaren Mischung, welche ein Poly(thio-)urethan Vorpolymerisat aufweist, welches einen Überschuss an Isocyanat Gruppen im Verhältnis zu Isocyanat-reaktiven Gruppen aufweist, kann durch zusätzliche Thiolkomponenten eine vollständige Polymerisation sichergestellt werden. Günstigerweise weist die polymerisierbare Mischung eine definierte Zugabe an Thiolkomponenten auf, abgestimmt auf den vorliegenden Überschuss an Isocyanat Gruppen, um in einem weiteren Verfahrensschritt eine vollständige Polymerisation sicherzustellen.

Die polymerisierbare Mischung weist mindestens eine Isocyanatkomponente auf, bevorzugt weist die polymerisierbare Mischung zwei oder mehrere Isocyanatkomponenten auf. Erfindungsgemäß ist zumindest eine solche Isocyanatkomponente ausgewählt aus einer der Verbindungen Isophorondiisocyanat, 2,5-Bis(isocyanatomethyl)-bicyclo-[2.2.1]-heptan, 4,4'-Diphenylmethandiisocyanat, 4,4'-Dicyclohexanmethandiisocyanat, Toluoldiisocyanat, Xylendiisocyanat oder Hexamethylendiisocyanat, 1,3-Bis(isocyanatomethyl)benzol oder 1,6-Diisocyanatohexan. Insbesondere kann die polymerisierbare Mischung nicht nur eine Isocyanatkomponente aus den vorstehend genannten Verbindungen aufweisen, sondern auch zwei oder mehrere, wobei sich die ausgewählten Isocyanatkomponenten insbesondere auch unterscheiden können. Insbesondere in Verbindung mit einer polymerisierbaren Mischung, welche ein Poly(thio-)urethan Vorpolymerisat aufweist, welches einen Überschuss an Isocyanat-reaktiven Gruppen im Verhältnis zu Isocyanat Gruppen aufweist, kann durch zusätzliche Isocyanatkomponenten eine vollständige Polymerisation sichergestellt werden. Günstigerweise weist die polymerisierbare Mischung eine definierte Zugabe an Isocyanatkomponenten auf, abgestimmt auf den vorliegenden Überschuss an Isocyanat-reaktiven Gruppen, um in einem weiteren Verfahrensschritt eine vollständige Polymerisation sicherzustellen.

Insbesondere in Bezug auf die beiden zuvor beschriebenen Konfigurationen von Poly(thio-)urethan Vorpolymerisaten gilt zu beachten, dass, da sowohl die Viskosität eines Vorpolymerisats als auch die Reaktionsgeschwindigkeit von Polyadditionsreaktionen stark abhängig von der Molekülgröße ist, die Bedingungen des Vorpolymerisationsvorgangs sorgfältig gewählt werden müssen, um eine angemessene Aushärtungsgeschwindigkeit bei einer späten Aushärtung zu erzielen, insbesondere bei einer Aushärtung durch Belichten mit (UV-)Licht.

In einer Weiterbildung kann die polymerisierbare Mischung noch weitere Bestandteile aufweisen, welche der Mischung, insbesondere nach (vollständiger) Auspolymerisation eine bzw. mehrere bzw. eine Vielzahl zusätzlicher und/oder alternativer Eigenschaften verleihen. Hierdurch kann die bereitgestellte polymerisierbare Mischung für eine Vielzahl von möglichen Anwendungen weitergebildet werden und ist insbesondere sehr vielseitig einsetzbar.

In einem weiteren, insbesondere dritten, Verfahrensschritt S104 erfolgt das Vermischen der polymerisierbaren Mischung mit mindestens einem weiteren Additiv, wobei dieses Additiv ein Photobasengenerator ist bzw. einen Photobasengenerator aufweist, zum Erhalt einer photopolymerisierbaren Mischung, d.h. einer Mischung, welche durch Belichten mit Licht aushärtbar ist. Unter einem Photobasengenerator wird eine photoaktive, chemische Verbindung verstanden, welche bei Bestrahlung mit Licht, insbesondere mit UV-Licht, organische Basen, wie zum Beispiel Amine, erzeugt bzw. bereitstellt. Solche Amin-Basen, bereitgestellt durch Photobasengeneratoren, können als Katalysator in einem Aushärteprozess, von Poly(thio-)urethanen, dienen und die Härtung von polymerisierbaren Mischungen, insbesondere die Härtung durch UV-Licht, ermöglichen. Mit anderen Worten induziert die Bestrahlung eines Photobasengenerators mit (UV-)Licht die Freisetzung einer katalytisch aktiven Spezies, insbesondere von katalytisch aktiven Aminen, welche in einem Polymerisationsprozess die Reaktion der monomeren Komponenten, beispielsweise von Isocyanaten und Isocyanat-reaktiven Komponenten, insbesondere Thiolen, aber auch von Vorpolymerisaten mit entsprechenden reaktiven Gruppen, insbesondere von NCO- bzw. SH- und/oder OH-Gruppen, ohne zusätzliche thermische Energiezufuhr ermöglicht. Vorteilhafterweise kann somit durch Vermischen bzw. Hinzumischen eines Photobasengenerators als ein Additiv zu einer bereitgestellten polymerisierbaren Mischung eine (UV-)photopolymerisierbare Mischung erhalten werden, wodurch eine anschließende Polymerisation, d.h. die Aushärtung der Komponenten der polymerisierbaren Zusammensetzung günstigerweise, insbesondere bevorzugt, bereits bei Raumtemperatur stattfindet, insbesondere ohne zusätzlichen thermischen Energieeintrag. Die Wahl einer geeigneten Verbindung als Photobasengenerator hängt von vielen Faktoren ab, zum Beispiel von der chemischen Zusammensetzung der Monomere in dem polymerisierbaren Mischung und/oder von (Qualitäts-) Anforderungen an das auspolymerisierte Produkt, wobei hier insbesondere der Erhalt gewisser optischen Eigenschaften in Verbindung mit der Verwendung als Glaskörper, insbesondere als Kunststofflinse, bevorzugt als ophthalmische Kunststofflinse, besonders bevorzugt als Kunststoffbrillenglas, eine übergeordnete Rolle spielt.

Als Photobasengeneratoren eignen sich prinzipiell verschiedene Substanzklassen, so können unter anderem spezielle Carbamate eingesetzt werden. Die Carbamatgruppe stellt hierbei die Verbindung zwischen einem Licht absorbierenden Chromophor und der freizusetzenden Amin-Base dar. Als nicht limitierende Beispielverbindungen seien hier 2-Nitrobenzyl N,N-dimethylcarbamat, 3,5 dimethoxybenzyl N,N-dimethylcarbamat und 1-Pyrenylmethyl-1-piperidincarboxylat genannt. Als weitere Substanzklasse können für Photobasengeneratoren auch spezielle Ammoniumsalze verwendet werden, insbesondere Ammoniumsalze, bei denen das Ammoniumkation kovalent an ein Licht absorbierendes Chromophor gebunden ist. Als nicht limitierende Beispiele seien hier 1-(2-phenyl-2-oxoethyl)-1,1,1-trimethylammonium thiocyanat und 1-(4-benzoylphenyl)-methyl-chinuclidonium thiocyanat genannt. Alternativ kann das Licht absorbierende Chromophor auch im Gegenion (Anion) der Ammoniumsalze enthalten sein. Hierunter fallen beispielsweise verschiedene Carboxylatsalze. Als nicht limitierende Beispiele hierfür seien Triethylammonium 2-(2-9H-Xathonyl)ethylcarboxylat und N,N-Diisopropylethylammonium 2-(Benzoylphenyl)2-methylethylcarboxylat genannt. In diese Kategorie fallen ebenfalls Ammoniumsalze von Tetraarylboraten. Aufgrund ihrer guten Löslichkeit in den voranstehend genannten Komponenten der Mischung sind Ammoniumsalze von Tetraarylboraten bevorzugt als Photobasengeneratoren geeignet, insbesondere solche Salze mit Ammoniumionen, welche einen vierfach substituierten Stickstoff enthalten, wovon drei Reste unabhängig voneinander im Wesentlichen Alkylgruppen aufweisen und der übrige Rest im Wesentlichen Wasserstoff aufweist. Als nicht limitierende Beispiele hierfür seien Triethylammonium Tetraphenylborat, N,N-Diisopropylethylammonium Tetraphenylborat und Chinuclidonium tetra(4-Chlorphenyl)borat genannt. Ein solcher Photobasengenerator kann dabei als Reinstoff zugegeben werden, oder gelöst in einer der oben genannten Thiolkomponenten, oder gelöst in einer der oben genannten Isocyanatkomponenten, oder gelöst in einem gängigen organischen Lösungsmittel.

Vorzugsweise ist der Photobasengenerator ausgewählt aus der Gruppe der Ammoniumsalze von Tetraarylboraten, bevorzugt ein Ammonium-Tetraarylboratsalz eines tertiären Amins gemäß Formel (I): 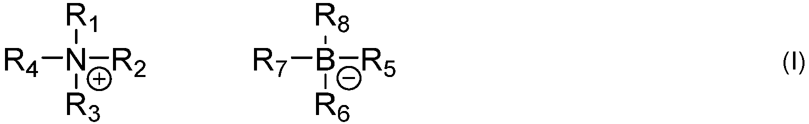
wobei die Reste R₁, R₂ und R₃ jeweils unabhängig voneinander unsubstituierte oder monosubstituierte (C₁-C₂₀)-Alkyl-Reste darstellen, wobei der Substituent aus Fluor, Chlor, Brom, einem Phenyl-Rest, einem Hydroxy-Rest, einem (C₁-C₄)-Alkoxy-Rest oder einem Polyoxyalken-Rest, wobei hier die Alkyleneinheit 2 bis 4 Kohlenstoffatome aufweist und die sich wiederholende Einheit n zwischen 1 und 20 liegt, ausgewählt sein kann;
wobei der Rest R₄ im Wesentlichen Wasserstoff darstellt;
wobei die Reste R₅, R₆, R₇ und R₈ jeweils unabhängig voneinander Phenyl-Reste darstellen, welche zwischen null und vier Substituenten aufwiesen, oder Naphthyl-Reste darstellen, welche zwischen null und zwei Substituenten aufweisen, wobei die Substituenten aus Fluor, Chlor, Brom, einem Phenyl-Rest, einem (C₁-C₄)-AlkylRest, einem (C₁-C₄)-Alkoxy-Rest oder einem Trifluormethyl-Rest ausgewählt sein können.

Vorzugsweise unterscheiden sich die Reste R₁, R₂, R₃ voneinander, d.h. sie sind unterschiedlich. In Abwandlung hiervon können sie vorzugsweise auch, insbesondere alle, zueinander identisch sein. In Weiterbildung hiervon können bevorzugt zwei oder drei Reste auch zusammen einen oder mehrere Zyklen ausbilden.

Vorzugsweise unterscheiden sich die Reste R₅, R₆, R₇ und R₈ voneinander, d.h. sie sind unterschiedlich. In Abwandlung hiervon können sie vorzugsweise auch, insbesondere alle, zueinander identisch sein.

Vorzugsweise beträgt der Anteil des Photobasengenerators an der Mischung kleiner oder gleich 10 Anteile, bevorzugt kleiner oder gleich 5 Anteile, besonders bevorzugt kleiner oder gleich 1 Anteil, am meisten bevorzugt kleiner oder gleich 0.5 Anteile, insbesondere genau 0.25 Anteile.

In einem weiteren, insbesondere vierten, Verfahrensschritt S106 wird die photopolymerisierbare Mischung auf das Substrat aufgebracht. Dieser Schritt ist nicht weiter eingeschränkt und es kann aus einer Vielzahl möglicher Verfahren ausgewählt werden, mit welchem eine solche Mischung auf ein Substrat aufgebracht werden kann. Das Aufbringen der photopolymerisierbaren Mischung erfolgt vorzugsweise durch Spin-Coating oder durch Anguss. Beim Spin-Coating, auch als Schleuderbeschichtung bezeichnet, wird die Mischung auf das Substrat aufgebracht und anschließend wird das Substrat in einer Rotationsbewegung derart rotiert, dass ein gleichmäßiges Ausbreiten der Mischung zum Erhalt einer gleichmäßigen Schicht, auf dem Substrat erhalten wird. In Abwandlung hiervon kann die polymerisierbare Mischung auch aufgebracht werden, während das Substrat bereits rotiert. Typischerweise findet ein solches Aufbringen mittels Spin-Coating in einer dafür vorgesehenen Vorrichtung statt, welche auch als SpinCoater bezeichnet wird, und im Allgemeinen für Schichtdicken von bis zu in etwa 100 µm, bevorzugt für Schichtdicken von bis zu in etwa 50 µm, geeignet ist. Bei einem Angussverfahren wird eine Schicht gebildet aus der photopolymerisierbaren Mischung auf dem Substrat angegossen. Dies geschieht typischerweise dadurch, dass ein Hohlraum ausgebildet wird, durch Anordnen des Substrats und demgegenüber einer Formschale, auch als Gießform bezeichnet, wobei der ausgebildete Hohlraum anschließend mit der photopolymerisierbaren Mischung befüllt wird. Typischerweise eignen sich hierfür Vorrichtungen, welche dem Fachmann aus dem Abgießen von Kunststofflinsen geläufig sind, wobei hier eine der beiden Formschalen durch das bereitgestellte Substrat ersetzt wird. Im Allgemeinen können mit einem solchen Angussverfahren Schichtdicken von bis zu in etwa 1 mm realisiert werden.

In einem weiteren, insbesondere fünften, Verfahrensschritt S108 wird die photopolymerisierbare Mischung bzw. die durch die photopolymerisierbare Mischung gebildete Schicht ausgehärtet bzw. auspolymerisiert. Das Aushärten kann im Allgemeinen sowohl durch Licht, insbesondere UV-Licht, als auch durch eine Kombination aus Bestrahlung mit Licht, insbesondere UV-Licht, mit anschließender thermischer Aushärtung, erfolgen. Insbesondere bei einer Mischung aufweisend einen Photobasengenerator als ein bevorzugtes Additiv findet die Aushärtung durch Bestrahlung mit Licht, insbesondere mit UV-Licht, statt. Hierbei absorbiert der als Additiv bereitgestellte Photobasengenerator die Energie des eingestrahlten (UV-)Lichts und setzt eine Aminverbindung frei, welche die Polyaddition der Isocyanate mit den Isocyanat-reaktiven Komponenten katalysiert, d.h. mit anderen Worten, dass die Polymerisation bzw. Aushärtung bei Raumtemperatur stattfindet und insbesondere ohne thermische Energiezugabe. Auf diese Weise lässt sich insbesondere ein kostengünstiges Aushärten erzielen, da auf das sowohl energieintensive als auch langwierige thermische Aushärten verzichtet werden kann. Durch Aushärten der auf das Substrat aufgebrachten Mischung wird ein Halbzeug ausgebildet.

Vorzugsweise weist die in Schritt S102 bereitgestellte polymerisierbare Mischung zumindest eine der folgenden Komponenten auf:
mindestens einen photochromen Farbstoff und/oder mindestens einen Farbstoff und/oder mindestens einen UV-Absorber und/oder mindestens einen Photosensitizer und/oder mindestens einen Metallkatalysator und/oder mindestens ein Oberflächenadditiv.

Mit anderen Worten weist die polymerisierbare Mischung vorzugsweise zumindest eine (weitere) Komponente auf, ausgewählt aus der Gruppe bestehend aus:
- photochrome Farbstoffe;
- Farbstoffe;
- UV-Absorber;
- Photosensitizer;
- Metallkatalysator;
- Oberflächenadditive.

Mögliche zusätzliche Bestandteile werden in den folgenden Absätzen näher erklärt, wobei besonderes Augenmerk daraufgelegt werden soll, dass die polymerisierbare Mischung wahlweise keine dieser Bestandteile aufweist, in Abwandlung hiervon eine, in Weiterbildung hiervon zwei, in weiterer Weiterbildung hiervon mehrere, und in noch weiterer Weiterbildung alle Bestandteile aufweisen kann.

Alternativ (oder zusätzlich) kann die polymerisierbare Mischung mindestens einen photochromen Farbstoff aufweisen. Eine derart veränderte Mischung weist dann als neue bzw. zusätzliche Eigenschaft ein photochromes Verhalten auf, worunter insbesondere verstanden wird, dass der in der Mischung enthaltene mindestens eine photochrome Farbstoff auf UV-Licht reagiert. Je nach Intensität des auftreffenden UV-Lichts bedingt der mindestens eine photochrome Farbstoff eine Eindunkelung oder Aufhellung durch eine reversible Änderung seiner molekularen Struktur, auch als Isomerisierung bezeichnet. Ein photochromer Farbstoff ändert somit sein Absorptionsverhalten als Reaktion auf die Bestrahlung mit UV-Licht. Lässt die Bestrahlung mit UV-Licht nach, nimmt der photochrome Farbstoff wieder seine ursprüngliche molekulare Struktur und damit auch sein ursprüngliches Absorptionsverhalten an. Ein photochromer Farbstoff ermöglicht somit ein reversibles Hin- und Herschalten zwischen einer dunklen und einer hellen Tönung. Vorzugsweise eignen sich insbesondere Naphthopyrane, bevorzugt für das (aus)gewählte Poly(thio-)urethan besonders geeignete Naphthopyrane, Spirooxazine und/oder Spiropyrane als photochrome Farbstoffe, welche einerseits ein schnelles Eindunkelungsverhalten, auch eingebettet in Poly(thio-)urethan Polymeren, und andererseits eine hohe Langlebigkeit aufweisen. Insbesondere kann die polymerisierbare Mischung nicht nur einen photochromen Farbstoff aus den vorstehend genannten Verbindungsgruppen aufweisen, sondern auch zwei oder mehrere, wobei sich die ausgewählten photochromen Farbstoffe insbesondere auch unterscheiden können. Mittels einer solchen, durch photochrome Farbstoffe, ergänzten Mischung lässt sich eine photochrome Schicht auf einem Substrat bzw. ein photochromer Glaskörper herstellen, welche bevorzugt als selbsttönendes Brillenglas verwendet werden kann und einen hohen Tragekomfort aufweist, da einen Wechsel zwischen einer herkömmlichen Korrektionsbrille, zum Beispiel einer Lesebrille, und einer Sonnenbrille, durch die selbsttönende Wirkung obsolet wird.

Alternativ (oder zusätzlich) kann die polymerisierbare Mischung einen Farbstoff aufweisen. Der Farbstoff kann der Mischung beispielsweise eine charakteristische Färbung bzw. besondere Absorptionseigenschaften, wie beispielsweise eine Filterwirkung, verleihen. Eine derart veränderte Mischung weist dann als neue bzw. zusätzliche Eigenschaft eine Vorfärbung bzw. eine, im Hinblick auf eine Mischung ohne Farbstoff, unterschiedliche Transmissionscharakteristik auf. Hierdurch wird insbesondere eine gefärbte Mischung erhalten, womit günstigerweise eine gefärbte Schicht bzw. ein gefärbter Glaskörper hergestellt werden kann. Bevorzugt handelt es sich hierbei um Azo-Farbstoffe, Cyanin-Farbstoffe, Anthrachinon-Farbstoffe oder dergleichen, wie sie beim herkömmlichen Einfärben von Glaskörpern, insbesondere Kunststoffbrillengläsern, vielfach eingesetzt werden. Insbesondere kann die polymerisierbare Mischung nicht nur einen Farbstoff aus den vorstehend genannten Verbindungsgruppen aufweisen, sondern auch zwei oder mehrere, wobei sich die ausgewählten Farbstoffe insbesondere auch unterscheiden können. Routinemäßig wählt der Fachmann einen geeigneten Farbstoff oder ein Gemisch geeigneter Farbstoffe aus.

Alternativ (oder zusätzlich) kann die polymerisierbare Mischung mindestens einen UV-Absorber aufweisen. Mit anderen Worten kann durch einen solchen Absorber ein gewünschtes Absorptionsverhalten herbeigeführt werden, wie insbesondere ein erhöhtes Absorptionsverhalten im UV-Bereich zur Ausprägung eines UV-Schutzes. Eine derart veränderte Mischung weist dann als neue bzw. zusätzliche Eigenschaft einen erhöhten bzw. verbesserten bzw. teilweisen Schutz vor UV-Licht auf, worunter insbesondere verstanden wird, dass die veränderte Mischung eine, zumindest teilweise, Filter- bzw. Sperrwirkung gegenüber UV-Licht aufweist. Vorzugsweise ist ein solcher UV-Absorber ausgewählt aus einer der Verbindungsgruppen Benzophenone, Benzotriazole oder Oxanilide. Insbesondere kann die polymerisierbare Mischung nicht nur einen UV-Absorber aus den vorstehend genannten Verbindungsgruppen aufweisen, sondern auch zwei oder mehrere, wobei sich die ausgewählten UV-Absorber insbesondere auch unterscheiden können. Je nach Art und Beschaffenheit des verwendeten UV-Absorbers kann es auch erforderlich sein, Farbstoffe zum Kaschieren einer vorliegenden Vorfärbung der Mischung beizumengen. Wird beispielsweise über zusätzlich beigemengte Komponenten ein erweiterter Schutz vor der Transmission von Strahlung aus dem ultravioletten und blauen Spektralbereich erzeugt, so kann es durch das dadurch bedingte, gezielte Entfernen von Strahlung insbesondere aus dem sichtbaren Spektrum dazu kommen, dass, beispielsweise durch zumindest teilweises Entfernen von blauem Licht, eine nicht mehr neutralen Farbwiedergabe von transmittiertem Licht entsteht. In einem solchen Fall spricht man vom Vorliegen einer Eigenfärbung, welche im vorstehenden Fall einen Gelbstich verursachen würde. Dies kann wiederum durch Beimengen eines Blaufarbstoffs zu einer neutralen Färbung kompensiert werden. Vorteilhafterweise erfolgt die Beimengung eines UV-Absorbers in Kombination mit einer Beimengung eines geeigneten Farbstoffs zur Kompensation eines nicht neutralen Farbeindrucks, weshalb in einem solchen Fall zumindest zwei Additive der Mischung beigemengt werden. Mittels einer solchen, durch einen UV-Absorber und ggfs. zusätzlicher (Kompensations-)Farbstoffe, ergänzten Mischung lässt sich ein Glaskörper herstellen, welcher einen UV-Schutz aufweist und bei bevorzugter Verwendung als Brillenglas die Augen des Trägers wirksam vor schädlichem UV-Licht schützt und gleichzeitig ein neutrales Erscheinungsbild bzw. einen neutralen Farbeindruck, d.h. insbesondere keine Eigenfärbung, aufweist.

Alternativ (oder zusätzlich) kann die polymerisierbare Mischung mindestens einen Photosensitizer aufweisen. Ein Photosensitizer ist eine Verbindung, welche als eine Art photochemischer Katalysator fungiert, welcher eingestrahltes Licht einer definierten Wellenlänge absorbiert und die durch Absorption aufgenommene Energie, zumindest teilweise, an eine zweite Verbindung überträgt, wobei diese zweite Verbindung mittels der übertragenen Energie eine Reaktion starten bzw. in eine Reaktion eintreten kann. Ohne einen solchen Photosensitizer hätte die zweite Verbindung keine Reaktion starten bzw. in keine Reaktion eintreten können, da ihre Absorptionsbande nicht mit der Wellenlänge des eingestrahlten Lichts überlappt bzw. übereinstimmt, d.h. die zweite Verbindung kann Licht der eingestrahlten Wellenlänge nicht absorbieren. Vorzugsweise ist ein solcher Photosensitizer ausgewählt aus einer der Verbindungsgruppen Thioxanthone, Anthracene oder Cumarine. Insbesondere kann die polymerisierbare Mischung nicht nur einen Photosensitizer aus den vorstehend genannten Verbindungsgruppen aufweisen, sondern auch zwei oder mehrere, wobei sich die ausgewählten Photosensitizer insbesondere auch unterscheiden können.

Alternativ (oder zusätzlich) kann die polymerisierbare Mischung mindestens einen Metallkatalysator aufweisen. Ein solcher Metallkatalysator ist insbesondere bei thermisch induzierten Aushärteprozessen von Vorteil, da dieser den thermischen Aushärteprozess katalysiert, worunter verstanden wird, dass die zum Aushärten benötigte thermische Energie herabgesetzt bzw. reduziert wird. Vorzugsweise ist ein solcher Metallkatalysator ausgewählt aus der Verbindungsgruppe der Organozinnverbindungen, bevorzugt ist der Metallkatalysator Dimethylzinnchlorid. Insbesondere kann die polymerisierbare Mischung nicht nur einen Metallkatalysator aus der vorstehend genannten Verbindungsgruppe aufweisen, sondern auch zwei oder mehrere, wobei sich die ausgewählten Metallkatalysatoren insbesondere auch unterscheiden können.

Alternativ (oder zusätzlich) kann die polymerisierbare Mischung mindestens ein Oberflächenadditiv aufweisen. Hierunter werden oberflächenaktive Substanzen verstanden, welche die Benetzungs-, Haftungs- oder Härte- bzw. Brucheigenschaften der polymerisierbaren Mischung verändern können, sowohl der noch unausgehärteten polymerisierbaren Mischung als auch die Eigenschaften der ausgehärteten polymerisierbaren Mischung. Vorzugsweise ist ein solches Oberflächenadditiv ausgewählt aus den Verbindungsgruppen der Alkylphosphate, Alkylpolyglycolether oder Polydimethylsiloxane. Insbesondere kann die polymerisierbare Mischung nicht nur ein Oberflächenadditiv aus den vorstehend genannten Verbindungsgruppen aufweisen, sondern auch zwei oder mehrere, wobei sich die ausgewählten Oberflächenadditive insbesondere auch unterscheiden können.

Bevorzugt erfolgt die Hinzugabe von Isocyanaten bzw. Isocyanatkomponenten und/oder Thiolen bzw. Isocyanat-reaktiven Komponenten in Kombination mit mindestens einem weiteren Additiv, wie beispielsweise einem photochromen Farbstoff, einem Farbstoff, einem UV-Absorber, einem Photosensitizer, einem Metallkatalysator und/oder einem Oberflächenadditiv da auf diese Weise vorteilhaft ein Vorlösen des mindestens einen weiteren Additivs in den Isocyanaten oder Thiolen ermöglicht werden kann.

Das Bereitstellen einer polymerisierbaren Mischung umfasst sowohl das Bereitstellen einer bereits vorhandenen Mischung als auch das Vermischen von Stoffen bzw. Verbindungen, insbesondere von Isocyanaten und Isocyanat-reaktiven Komponenten und optional einem Metallkatalysator, mit anschließender thermisch induzierter Vor-Polymerisation zum Erhalt einer solchen polymerisierbaren Mischung bzw. eines entsprechenden Vorpolymerisats, welches für das Verfahren bereitgestellt wird.

Insbesondere weist polymerisierbare Mischung mindestens eines der zuvor genannten Additive wie einen photochromen Farbstoff, einen Farbstoff, einen UV-Absorber, einen Photosensitizer, einen Metallkatalysator und/oder Oberflächenadditive auf, bevorzugt eine Vielzahl dieser Additive, um der Mischung (eine) neue Eigenschaft bzw. zusätzliche Eigenschaft(en) verleihen. Der Zusatz von UV-Absorbern verleiht dem Glaskörper beispielsweise einen Schutz vor schädlicher UV-Strahlung, der Zusatz von photochromen Farbstoffen bietet zusätzlichen Licht und Blendungsschutz. Aus der vorangegangenen Auflistung können beliebige Additive ausgewählt werden, insbesondere auch unter Kombination verschiedener Additive, um die gewünschten Produkteigenschaften zu erhalten.

In einem weiteren, optionalen Verfahrensschritt S110 kann ein thermisches Nachbehandeln, auch als Tempern bezeichnet, stattfinden, wobei dieser Verfahrensschritt nachgeordnet an ein Aushärten mit Licht, insbesondere mit UV-Licht, erfolgt. Im Rahmen eines solchen Temper-Schrittes findet ein Erwärmen mittels thermischer Energiezufuhr des ausgebildeten Halbzeugs bzw. Glaskörpers statt, wodurch dieses seine volle Härte erreicht, interne Spannungen reduziert werden und ein Halbzeug bzw. Glaskörper erhalten wird. Vorteilhafterweise wird hierdurch ein Halbzeug bzw. Glaskörper erhalten, welches eine hohe mechanische Belastbar- bzw. Beständigkeit aufweist.

In einem weiteren, insbesondere optionalen, Verfahrensschritt S112 wird zumindest eine Beschichtung auf dem Glaskörper ausgebildet. Hierunter werden sämtliche Veredelungen verstanden, wie beispielsweise Lacke, insbesondere Pufferlacke zur Erhöhung bzw. Verbesserung der Bruchfestigkeit des Glaskörpers, Hartlacke zur Erhöhung bzw. Verbesserung der Kratzfestigkeit des Glaskörpers, und/oder Beschichtungen, insbesondere Haftschichten zur Erhöhung bzw. Verbesserung von Haftungseigenschaften des Glaskörpers, (mehrlagige) interferometrische Schichtsysteme zur Ausbildung eines ent- oder verspiegelten Glaskörpers sowie funktionelle Beschichtung zur Ausbildung eines Glasköpers aufweisend funktionelle Eigenschaften, wie zum Beispiel hydrophobe und/oder oleophobe Eigenschaften. Bevorzugt wird ein solcher Glaskörper mit einer oder mehreren solcher Beschichtungen versehen, um eine Kombination von vorteilhaften Eigenschaften zu erhalten, zum Beispiel kann ein solcher Glaskörper versehen werden mit einem Pufferlack, einem Hartlack, einer Haftschicht, einer mehrlagigen interferometrischen Entspiegelungsbeschichtung und einer funktionellen Beschichtung zum Erhalt eines bruch- und kratzfesten, entspiegelten und hydrophoben Glaskörpers.

In einer vorteilhaften Weiterbildung sind einer oder beide der Schritte S110 und S112 vorgesehen, vorzugsweise in der durch die (aufsteigende) Nummerierung des jeweiligen Schritts angegebenen Reihenfolge mit Bezug zueinander und/oder die vorgenannten Schritt S100, S102, S104, S106, S108, S110, S112, ohne dass die Erfindung hierauf beschränkt ist.

In einer Weiterbildung umfasst das vorgestellte Verfahren im Schritt (S100) des Bereitstellens des Substrats, insbesondere auch, ein Ausbilden des Substrats, wobei das Ausbilden des Substrats die folgenden Schritte aufweist:
- Anordnen von zwei Formschalen als Negativabbild der Form bzw. Geometrie des auszubildenden Substrats; und
- Bereitstellen einer polymerisierbaren Substratmischung
- Einbringen bzw. Eingießen der polymerisierbaren Substratmischung in den zwischen den beabstandet angeordneten Formschalen ausgebildeten Hohlraum; und
- Aushärten der polymerisierbaren Substratmischung.

Bevorzugt können die Formschalen aus Mineralglas ausgebildet sein. Beide Formschalen können in einer voreinander beabstandeten Position fixiert sein, um die Gießform des Substrats auszubilden. Das Fixieren kann durch ein Klebeband oder einen Polymer- bzw. Elastomerring erfolgen, welche bevorzugt auch einen Spalt zwischen den Formschalen abdichtet, um die Form auszubilden, in welche die Substratmischung eingegossen werden kann. Folglich haben die Formschalen bzw. die Form eine zu dem auszubildenen Halbzeug komplementäre Form.

Vorzugsweise weist die polymerisierbare Substratmischung zumindest zwei der folgenden Komponenten auf:
- ein Poly(thio-)urethan Vorpolymerisat, hergestellt aus Isocyanaten und Isocyanat-reaktiven Komponenten, wobei das Verhältnis der Komponenten derart ist, dass ein Überschuss an Isocyanat-reaktiven Gruppen im Vergleich zu Isocyanat Gruppen vorliegt; und/oder
- ein Poly(thio-)urethan Vorpolymerisat, hergestellt aus Isocyanaten und Isocyanat-reaktive Komponenten, wobei das Verhältnis der Komponenten derart ist, dass ein Überschuss an Isocyanat Gruppen im Vergleich zu Isocyanat-reaktiven Gruppen vorliegt; und/oder
- eine Thiolkomponente; und/oder
- eine Isocyanatkomponente.

Vorzugsweise weist die polymerisierbare Substratmischung zumindest einen Photobasengenerator auf, wodurch die Substratmischung photopolymerisierbar ist.

Vorzugsweise erfolgt das Aushärten der photopolymerisierbaren Substrat-Mischung durch Belichten, insbesondere mittels UV-Licht.

Bevorzugt erfolgt nach der Bestrahlung mit Licht, insbesondere mit UV-Licht eine zusätzliche, thermische Aushärtung der Substratmischung.

Besonders bevorzugt sind die Substratmischung (in Schritt S100) und die Mischung (in Schritt S102) identisch.

Das vorgeschlagene Verfahren kann in Weiterbildung Anwendung finden, um im Schritt des Bereitstellens eines Substrats zunächst ein Substrat auszubilden. Hierbei werden in einem ersten Schritt zunächst zwei, insbesondere Mineralglas-, Formschalen als Negativabbild der Form bzw. Geometrie des auszubildenden Substrats bereitgestellt, wobei diese bevorzugt derart beabstandet angeordnet sind, dass zwischen diesen Formschalen ein Hohlraum ausbildet ist, welcher der zu erhaltenden Form des späteren Substrats entspricht. In einem nächsten Schritt wird eine polymerisierbare Mischung bereitgestellt, welche wie vorangegangenen ausgeführte Bestandteile aufweist, wobei diese Mischung mit einem Photobasengenerator vermischt wurde bzw. vermischt ist bzw. einen Photobasengenerator enthält, wodurch diese Mischung insbesondere eine photopolymerisierbare Mischung darstellt. In einem nächsten Schritt wird diese Mischung in den Hohlraum zwischen den beabstandet angeordneten Formschalen eingefüllt bzw. eingegossen. In einem nächsten Schritt wird die photopolymerisierbare Mischung durch Belichten, insbesondere mit UV-Licht, ausgehärtet, wobei hierbei durch den Photobasengenerator eine Licht- bzw. UV-Licht-induzierte Aushärtung bzw. Auspolymerisation stattfindet, wodurch ein auspolymerisiertes Substrat, insbesondere ein Halbzeug bzw. Glaskörper, ausgebildet wird. Ein derart ausgebildetes Substrat kann in dem vorgeschlagenen Verfahren als Substrat eingesetzt werden, wobei es gemäß den vorstehenden Erläuterungen mit dem vorgeschlagenen Verfahren mit einer zusätzlichen Schicht bzw. einem zusätzlichen Überfang bzw. mit einem Anguss versehen werden kann.

Vorzugsweise kann die Aushärtung zusätzlich noch thermisch erfolgen, d.h. es findet zuerst ein Aushärten der Mischung durch Bestrahlung mit Licht, insbesondere mit UV-Licht, statt und nachgeordnet noch eine thermische Aushärtung. Hierdurch kann günstigerweise sichergestellt werden, dass das gebildete Substrat vollständig ausgehärtet ist, da ein Substrat eine, im Vergleich zu einer Schicht, größere Dicke von typischerweise mehreren Millimetern aufweist und es aufgrund des größeren Volumens an auszuhärtender polymerisierbarer Mischung sein kann, dass die UV-induzierte Aushärtung nicht zur vollständigen Aushärtung ausreicht. Vorteilhafterweise kann durch Kombination der beiden Aushärtemethoden eine Verkürzung der Aushärtedauer erzielt werden, wobei sich hier insbesondere durch die durch Bestrahlung mit Licht vorangegangene, erste Aushärtung die Dauer der thermischen Aushärtung reduzieren lässt, wodurch insbesondere der hierfür benötige Energiebedarf verringert wird.

Das vorgestellte Verfahren ist vielseitig anwendbar und es versteht sich von selbst, dass Verfahrensschritte in beliebiger Reihenfolge angeordnet und insbesondere auch wiederholt werden können, um einen Glaskörper mit einer Kombination von neuen bzw. zusätzlichen und insbesondere vorteilhaften Eigenschaften zu erhalten bzw. herzustellen. Ebenso versteht es sich von selbst, dass dem Fachmann geläufige bzw. zum Stand der Technik gehörende Verfahrensschritte ergänzt werden können, wie beispielsweise ein Evakuieren der polymerisierbaren Mischung und/oder eine Verwendung spezieller Vorrichtungen zum Aufbringen bzw. zum Applizieren der polymerisierbaren Mischung bzw. zum Entformen. Mit diesem Verfahren lassen sich Glaskörper herstellen, insbesondere Kunststofflinsen, bevorzugt ophthalmische Kunststofflinsen, besonders bevorzugt Kunststoffbrillengläser, welche durch geeignete Wahl von Additiven, welche der polymerisierbaren Mischung hinzugegeben bzw. beigemengt werden, eine Vielzahl von vorteilhaften bzw. nützlichen Eigenschaften aufweisen können. Dabei kann mittels des vorgestellten Verfahrens ein Glaskörper an sich hergestellt werden oder es kann ein bereitgestelltes Substrat mittels des Verfahrens mit einer zusätzlichen Schicht bzw. einer zusätzlichen Lage bzw. eines Angusses bzw. eines Überfangs versehen werden, wobei beide Ausgangssituationen gemeinsam haben, dass der hergestellte Glaskörper neue bzw. zusätzliche und insbesondere vorteilhafte Eigenschaften aufweist, wobei die zusätzlichen Eigenschaften über Additive wie photochrome Farbstoffe, Farbstoffe, UV-Absorber, Photosensitizer, Metallkatalysatoren und/oder Oberflächenadditive realisiert werden, welche in der (photo-)polymerisierbaren Mischung enthalten bzw. bereitgestellt sind.

Ein Aspekt betrifft eine nach dem vorangegangenen Verfahren hergestellten Glaskörper bzw. Halbzeug bzw. Linse bzw. eine mit zumindest einer solchen Linse versehene Brille oder Kontaktlinse. Der auf diese Weise hergestellte Glaskörper zeichnet sich insbesondere dadurch aus, dass dieser gemäß des vorangegangenen Verfahrens durch (UV-)Licht induzierte Aushärtung einer photopolymerisierbaren Mischung auspolymerisiert wurde, wobei zunächst eine polymerisierbare Mischung, aufweisend zumindest eine Isocyanat und eine Isocyanat-reaktive Komponente, mit einem Ammoniumsalz des Tetraarylborats als einem bevorzugten Photobasengenerator zum Erhalt einer photopolymerisierbaren Mischung vermischt wurde. Es versteht sich, dass die Anwendung einer solchen Linse nicht nur auf die Brillenoptik bzw. Kontaktlinsen beschränkt ist, sondern auch bei anderen optischen Linsen auf den Gebieten der Fotografie, Projektion, Mikroskopie, Beleuchtung beispielsweise in Mobilfunkgeräten, Scheinwerfern, optischen Messinstrumenten, etc. Verwendung finden kann.

Ein Aspekt betrifft eine nach dem vorangegangenen Verfahren mit einer zusätzlichen Schicht bzw. einem Überfang versehenen Glaskörper bzw. Linse, wobei diese zusätzliche Schicht wahlweise durch ein Anguss- oder Spincoating-Verfahren hergestellt bzw. ausgebildet worden ist. Diese Schicht zeichnet sich insbesondere dadurch aus, dass diese gemäß des vorangegangenen Verfahrens durch Aufbringen einer photopolymerisierbaren Mischung und anschließender (UV-)Licht induzierter Aushärtung auspolymerisiert wurde, wobei zunächst eine polymerisierbare Mischung, aufweisend zumindest eine Isocyanat und eine Isocyanat-reaktive Komponente, mit einem Ammoniumsalz des Tetraarylborats als einem bevorzugten Photobasengenerator zum Erhalt einer photopolymerisierbaren Mischung vermischt wurde.

Ein Aspekt betrifft eine photopolymerisierbare Mischung für ein Poly(thio-)urethan, aufweisend eine Isocyanatkomponente und optional eine Thiolkomponente, wobei die polymerisierbare Mischung mindestens ein Poly(thio-)urethan Vorpolymerisat aufweist, ausgewählt aus:
- Ein Poly(thio-)urethan Vorpolymerisat, hergestellt aus Isocyanaten und Isocyanat-reaktiven Komponenten, wobei das Verhältnis der beiden Komponenten derart ist, dass ein Überschuss an Isocyanat-reaktiven Gruppen im Vergleich zu Isocyanat Gruppen vorliegt;
   und/oder
- Ein Poly(thio-)urethan Vorpolymerisat, hergestellt aus Isocyanaten und Isocyanat-reaktiven Komponenten, wobei das Verhältnis der beiden Komponenten derart ist, dass ein Überschuss an Isocyanat Gruppen im Vergleich zu Isocyanat-reaktiven Gruppen vorliegt;
und wobei die Mischung zusätzlich zumindest einen Photobasengenerator aufweist.

Mittels einer solchen polymerisierbaren Mischung lassen sich insbesondere (transparente) Glaskörper aus Poly(thio-)urethan herstellen bzw. abgießen. Eine solche (photo-)polymerisierbare Mischung, mit anderen Worten eine photopolymerisierbare Poly(thio-)urethan-Gießharzmischung kann bei der Herstellung von (transparenten) Glaskörpern und/oder Veredelungen von solchen Glaskörpern mit zusätzlichen Schichten Verwendungen finden.

Die Mischung zeichnet sich durch den Photobasengenerator insbesondere dadurch aus, dass diese insbesondere durch Bestrahlung mit Licht, bevorzugt UV-Licht, aushärtbar ist. Vorteilhafterweise lässt sich damit eine beschleunigte Aushärtung erzielen, insbesondere ohne dass ein herkömmlicher, zeitlich langwieriger, thermischen Aushärteprozess erforderlich ist.

Es versteht sich von selbst, dass für die gemäß diesem Aspekt vorgeschlagene (photo)polymerisierbare Mischung insbesondere alle Weiterbildungen und Unteraspekte ebenso Anwendung finden, die in den vorangegangenen Aspekten der vorliegenden Anmeldung, insbesondere in den Erklärungen zu dem vorangegangenen Verfahren, erläutert wurden.

Ein Aspekt betrifft ein Halbzeug, welches nach einem erfindungsgemäßen Verfahren hergestellt ist. Dieses Halbzeug kann weiteren Bearbeitungsschritten unterworfen sein, insbesondere um weiteren Beschichtungen aufzubringen, wie beispielsweise zumindest eine Schutzschicht, welche insbesondere aufgrund ihrer Härte vor mechanischen Beschädigungen schützt, und/oder eine Entspiegelungsschicht bzw. Antireflexionsschicht, welche die Reflexionen von Licht an den Grenzflächen des Halbzeugs mindert und/oder eine Verspiegelungsschicht, welche die Reflexionen von Licht an den Grenzflächen des Halbzeugs erhöht und/oder eine hydrophobe und/oder oleophobe Schicht, welche das Anhaften von hydrophilen und/oder oleophilen Stoffen mindert. Das Halbzeug kann auch mechanisch bearbeitet werden, um eine vorbestimmte Form zu erzielen.

Ein Aspekt betrifft einen Glaskörper, insbesondere ein Brillenglas, welcher aus einem Halbzeug hergestellt ist, bevorzugt unter Durchführen eines der im vorstehenden Absatz genannten Bearbeitungsschritte. Das mechanische Bearbeiten des Brillenglases als bevorzugter Aufführung des Glaskörpers, kann insbesondere ein Formrandungsprozess sein, um das Brillenglas in eine vorbestimmte Brillenfassung einsetzen zu können. Die durch das Einsetzen eines oder zweier Brillengläser in eine Fassung führt zu einem weiteren Aspekt und zwar zu einer Brille unter Verwendung zumindest eines Glaskörpers bzw. Halbzeugs.

Es versteht sich, dass der Glaskörper auch eine andere optische Linse, beispielsweise für Kameras, Sensoren, Smartphones, Mikroskope oder ähnliches sein kann. Alternativ könnte der Glaskörper auch zumindest ein Teil eines Gehäuses für eine Lichtquelle (z.B. LED, einem Scheinwerfer), eines (optischen) Sensors, eines Schutzgehäuses mit zumindest einem transparenten Teil sein. Insbesondere kann der Glaskörper in Verbindung mit bevorzugten photochromen Eigenschaften vorteilhafterweise geeignet sein, einen (optischen) Sensor vor einer zu großen Menge einfallenden Lichts, insbesondere UV-Lichts, zu schützen.

Die Angabe von Anteilen in der vorliegenden Anmeldung, insbesondere in Zusammenhang mit der Benennung von Anteilen verschiedener Komponenten an einer Mischung bzw. Zusammensetzung, bezieht sich auf Gewichtsprozente bzw. gewichtsprozentuale Anteile, sofern nichts anderes angegeben ist.

Die Angaben von Zahlenwerten, welche mit "etwa" angegeben sind, können bevorzugt um +/- 10% vom angegebenen Wert, besonders bevorzugt um +/- 5% vom angegebenen Wert, besonders bevorzugt um +/- 2% vom angegebenen Wert abweichen und insbesondere exakt der angegebene Wert sein.

Die Formulierung "im Wesentlichen" meint, dass ein Stoff bzw. ein Material bzw. eine Mischung bzw. eine Zusammensetzung bzw. eine Verbindung zum größten Teil aus dem angegebenen Stoff bzw. Material besteht, d.h. "X besteht im Wesentlichen aus Y" bedeutet, dass der Anteil von Y an X insbesondere größer oder gleich 50 %, bevorzugt größer oder gleich 75 %, besonders bevorzugt größer oder gleich 90 % ist und schließt auch den Fall mit ein, dass X nur aus Y besteht bzw. gebildet ist.

Im Folgenden werden Ausführungsformen der Erfindung anhand der Figuren näher beschrieben. Es versteht sich, dass die vorliegende Erfindung nicht auf die in den Figuren gezeigten Ausführungsformen beschränkt ist, und dass einzelne Merkmale unterschiedlicher Ausführungsformen im Rahmen der beiliegenden Ansprüche zu weiteren Ausführungsformen kombiniert werden können. Gleiche Bezugszeichen weisen auf gleiche bzw. wiederkehrende Elemente hin. Es zeigen:
- Fig. 1 eine schematische Zeichnung einer Ausführungsform des Verfahrens gemäß einem Aspekt der Erfindung;
- Fig. 2 einen Schnitt einer Ausführungsform eines Halbzeugs, hergestellt nach einem Verfahren gemäß einem Aspekt der Erfindung, bevorzugt wie in Fig. 1 dargestellt;
- Fig. 3 eine schematische Zeichnung einer Weiterbildung des Verfahrens aus Fig. 1 aufweisend zusätzliche, optionale Verfahrensschritte;
- Fig. 4 eine schematische Zeichnung einer Ausführungsform eines Glaskörpers bzw. Halbzeugs, die Weiterbildung des Glaskörpers bzw. Halbzeugs hergestellt nach einem Verfahren gemäß einem Aspekt der Erfindung, bevorzugt wie in Fig. 3 dargestellt;
- Fig. 5 eine Strukturdarstellung bzw. Formel einer Ausführungsform eines Photobasengenerators.

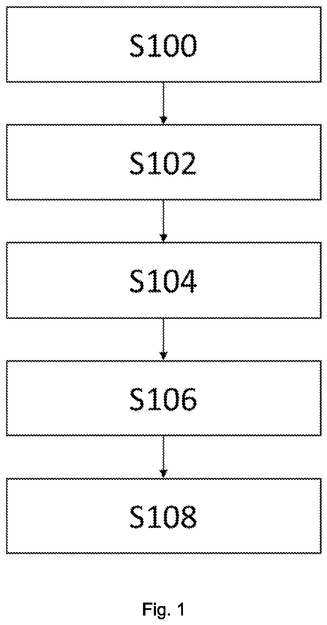

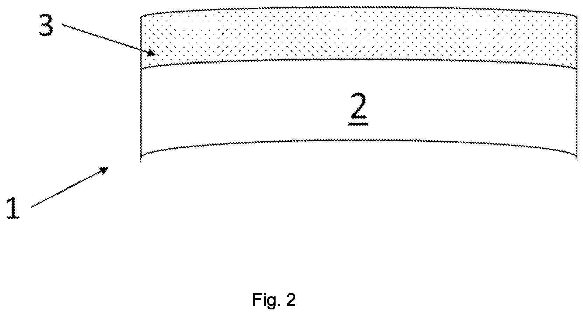

Um eine möglichst hohe Anschaulichkeit zu gewährleisten, wird in den folgenden Absätzen das Verfahren nach Figur 1 in Zusammenschau mit dem Gegenstand aus Figur 2 beschrieben, wobei hierbei insbesondere dem Umstand Rechnung getragen wird, dass ein Gegenstand gemäß Figur 2 bevorzugt nach einem Verfahren gemäß Figur 1 hergestellt worden ist bzw. werden kann.

Figur 1 zeigt eine schematische Zeichnung einer Ausführungsform des Verfahrens zur Herstellung eines Glaskörpers bzw. Halbzeugs 1 gemäß einem Aspekt der Erfindung, wie gezeigt in Figur 2, wobei ein solches Halbzeug 1, aufweisend ein Substrat 2, wobei auf dem Substrat 2 eine zusätzliche Schicht bzw. ein Überfang bzw. auch ein Anguss 3 ausgebildet wurde.

In einem ersten Schritt S100 wird zunächst ein Substrat 2 bereitgestellt. Bevorzugt wird hier als ein Substrat 2 ein Kunststoffbrillenglas, besonders bevorzugt hergestellt aus Poly(thio-)urethan mit einem Brechungsindex von etwa 1,6 bei einer Wellenlänge von etwa 550 nm bereitgestellt. In einem nächsten Schritt S102 wird eine polymerisierbare Mischung bereitgestellt, wobei das Bereitstellen sowohl das Herstellen einer solchen Mischung umfasst als auch das Verwenden einer bereits hergestellten solchen Mischung. Bevorzugt wird in diesem Schritt eine polymerisierbare Mischung bereitgestellt, welche als einen ersten Bestandteil ein Vorpolymerisat aufweist. Als bevorzugtes Vorpolymerisat findet ein Poly(thio-)urethan-Vorpolymerisat Verwendung, welches einen Überschuss an Thiolkomponenten (und damit Isocyanat-reaktiven Komponenten) aufweist. Ein solches Vorpolymerisat kann durch Vermischen unter Erhitzen auf etwa 80 °C unter ständigem Rühren der folgenden Komponenten in den angegebenen Anteilen sowie anschließender Vorpolymerisation für etwa 7 Stunden erhalten werden: 19 Anteile 2,5-Bis(isocyanatomethyl)-bicyclo-[2.2.1]-heptan als bevorzugter Verbindung für eine bzw. die Isocyanat Komponente, 22.9 Anteilen Pentaerythrit-tetrakis-(3-mercapto-propionat) und 58.1 Anteile an 4-(mercaptomethyl)-1,8-dimercapto-3,6-dithiaoctan als bevorzugten Verbindungen für eine bzw. die Isocyanat-reaktive Komponente und 0.01 Anteile Dimethylzinndichlorid als bevorzugter Verbindung eines optionalen Metallkatalysators zur Beschleunigung der thermisch induzierten Vorpolymerisation. Das so erhaltene Poly(thio-)urethan-Vorpolymerisat mit Thiolüberschuss als bevorzugtes Vorpolymerisat wird anschließend zusammen mit 2,5-Bis(isocyanatomethyl)-bicyclo-[2.2.1]-heptan als bevorzugter Verbindung für die Isocyanat Komponente bereitgestellt. In einer bevorzugten Weiterbildung hiervon wird als optionale Komponente ein photochromer Naphthopyranfarbstoff bereitgestellt, welcher der Mischung nach Auspolymerisation photochrome Eigenschaften verleiht, d.h. eine solche Mischung ist geeignet zur Ausbildung einer insbesondere photochromen, Schicht 3, welche einem damit versehenen Substrat 2 photochrome Eigenschaften verleiht, wodurch ein bevorzugt photochromer Glaskörper bzw. ein photochromes Halbzeug 1 hergestellt werden kann.

In einem nächsten Verfahrensschritt S104 wird die in Schritt S102 bereitgestellten Komponenten für die polymerisierbare Mischung bzw. die bereitgestellte polymerisierbare Mischung verwendet, wobei zum Erhalt einer photopolymerisierbaren Mischung als zusätzliche Komponente Triethylammoniumtetraphenylborat als bevorzugter Photobasengenerator bereitgestellt wird. Insbesondere durch das Triethylammoniumtetraphenylborat als bevorzugten Photobasengenerator wird die polymerisierbare Mischung zu einer photopolymerisierbaren Mischung, wodurch die anschließende Polymerisation, d.h. die Aushärtung der Komponenten der polymerisierbaren Zusammensetzung günstigerweise, insbesondere bevorzugt, bereits bei Raumtemperatur stattfindet, insbesondere ohne zusätzlichen thermischen Energieeintrag. Das Triethylammoniumtetraphenylborat und der bereitgestellte photochrome Farbstoff werden zusammen in der ebenfalls bereitgestellten 2,5-Bis(isocyanatomethyl)-bicyclo-[2.2.1]-heptan Verbindung als bevorzugter Verbindung für die Isocyanat Komponente vorgelöst, ehe das Vorpolymerisat beigemengt wird. Die Komponenten werden mit einem Magnetrührer gründlich durchmischt, um eine photopolymerisierbare Mischung zu erhalten.

In einem nächsten Verfahrensschritt S106 wird die in Schritt S104 erhaltene photopolymerisierbare Mischung auf das Substrat 2 aufgetragen. Hierfür wird als bevorzugtes Verfahren ein Angussverfahren gewählt, bei dem das in Schritt S100 bereitgestellte Substrat 2 zunächst beabstandet von einer Quarzglasformschale als bevorzugter Mineralglasformschale angeordnet wird, sodass sich zwischen Mineralglasformschale und Substrat 2 ein geeigneter Hohlraum ausbildete, welcher eine gewünschte Schichtdicke von etwa 0,3 mm aufweist, wobei diese Anordnung aus beabstandet angeordneter Formschale und Substrat auch als Gießpaket bezeichnet wird. Die Oberfläche der Mineralglasformschale, welche die Innenseiten des Hohlraums ausbildete, wurde zuvor mit einem Wasser- und Fettabweisenden Film beschichtet. Die photopolymerisierbare Mischung, auch als Gießharz bezeichnet, wird dann in den ausgebildeten Hohlraum zwischen Substrat 2 und Mineralformschale gegeben.

In einem nächsten Verfahrensschritt S108 findet ein Aushärten der photopolymerisierbaren Mischung statt. Hierbei wird das mit der photopolymerisierbaren Mischung befüllte Gießpaket mit einer UV-Lichtquelle als bevorzugter Lichtquelle für die Licht-induzierte Aushärtung bestrahlt, um eine ausgehärtete Schicht 3 auszubilden. Die Bestrahlung mit Licht, insbesondere UV-Licht, führt dazu, dass das Triethylammoniumtetraphenylborat als bevorzugter Photobasengenerator eine Aminbase freisetzt, welche als Katalysator in dem Aushärteprozess dient und in einem solchen Polymerisationsprozess die Reaktion der monomeren Komponenten, beispielsweise von Isocyanaten und Isocyanat-reaktiven Komponenten, insbesondere Thiolen, aber auch von Vorpolymerisaten mit entsprechenden reaktiven Gruppen, insbesondere von NCO- bzw. SH- und/oder OH-Gruppen, ohne zusätzliche thermische Energiezufuhr, ermöglicht. Hierdurch wird die Polymerisation bzw. Härtung bzw. Aushärtung der polymerisierbaren Mischung in dem befüllten Gießpaket, insbesondere durch (UV-)Licht, sichergestellt. Nach vollständiger Aushärtung durch Bestrahlung findet ein Entformen des Gießpakets statt, bei dem die Mineralglasformschale entfernt wird und ein, in diesem Fall photochromer, Glaskörper bzw. Halbzeug 1 erhalten wird, bei welchem eine zusätzliche Schicht aus einer photopolymerisierbaren Mischung ausgebildet wurde, wobei das Ausbilden dieser Schicht 3 durch Bestrahlung mit Licht und insbesondere ohne, langwierige, thermische Aushärtung erreicht wurde.

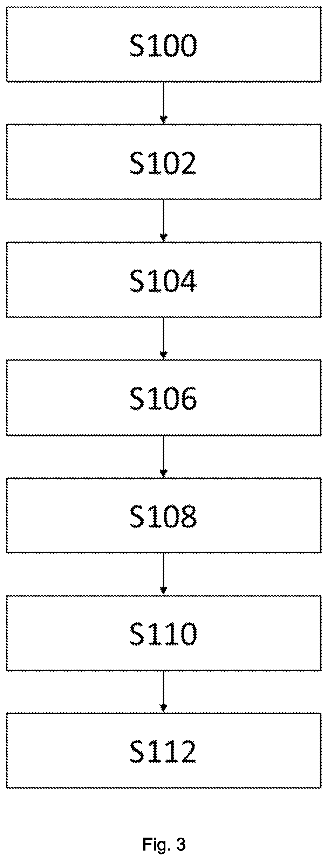

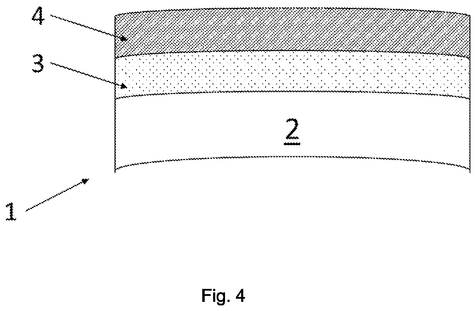

Um eine möglichst hohe Anschaulichkeit zu gewährleisten, wird in den folgenden Absätzen das Verfahren gemäß Figur 3 in Zusammenschau mit dem Gegenstand aus Figur 4 beschrieben, wobei hierbei insbesondere dem Umstand Rechnung getragen wird, dass ein Gegenstand gemäß Figur 4 bevorzugt nach einem Verfahren gemäß Figur 3 hergestellt worden ist bzw. werden kann.

Figur 3 zeigt eine schematische Zeichnung einer Ausführungsform des Verfahrens zur Herstellung eines Glaskörpers bzw. Halbzeugs 1 gemäß einem Aspekt der Erfindung, wie gezeigt in Figur 4, wobei ein solcher Glaskörper 1, aufweisend ein Substrat 2, wobei auf dem Substrat 2 eine zusätzliche Schicht bzw. ein Überfang bzw. auch ein Anguss 3 ausgebildet wurde und wobei der Glaskörper 1 mit einer zusätzlichen Beschichtung 4 versehen ist. Das Verfahren gemäß Figur 3 stellt eine Weiterbildung des Verfahrens aus Figur 1 dar.

Das zuvor vorgestellte Verfahren ist in der schematischen Darstellung in Figur 3 dahingehend weitergebildet, dass anschließend an das Aushärten durch Licht ein optionaler Verfahrensschritt S110 der thermischen Nachbehandlung stattfindet. Ein solche optionaler Verfahrensschritt kann durchgeführt werden, um einen Glaskörper bzw. ein Halbzeug 1 zu erhalten, welches spannungsfrei und gehärtet ist. Hierbei wird der erhaltene Glaskörper bzw. das Halbzeug 1 für mehrere Stunden, bevorzugt für zwei Stunden, in einem Umluftofen als bevorzugter Nachbehandlungsvorrichtung gelagert, wobei die Wärmezufuhr bei einer bevorzugten Temperatur von etwa 120 °C zu einem Abbau von Spannungen in der ausgebildeten Schicht führt und hierdurch ein besonders widerstandsfähiger Glaskörper erhalten wird.

Eine weitere Weiterbildung stellt Schritt S112 dar, in welchem der erhaltene, optional in Schritt S110 thermisch nachbehandelte, Glaskörper 1 mit (zumindest) einer (weiteren) Beschichtung 4 versehen wird. Hierbei kann der Fachmann aus einer Vielzahl geläufiger Beschichtungen auswählen und weiß, je nach Art der Beschichtung, das ebenfalls passende Beschichtungsverfahren zu wählen. Für einen Glaskörper bzw. ein Halbzeug 1 aus einem Kunststoffmaterial empfiehlt sich beispielsweise als eine zusätzliche Beschichtung 4 für zusätzliche Härte bzw. Kratzschutz eine Hartlackbeschichtung, welchen dem Glaskörper 1 einen verbesserten Schutz gegenüber Kratzern verleihen. Alternativ oder zusätzlich kann auch ein Pufferlack als eine (bzw. weitere) zusätzliche Beschichtung 4 aufgebracht werden, welche dem Glaskörper 1 eine erhöhte Bruchfestigkeit verleiht. Hart- und/oder Pufferlacke werden in Regel im Rahmen eines Tauchbeschichtungsverfahrens aufgebracht, bei dem der zu beschichtende Glaskörper 1 wiederholt mehrfach in ein Becken eingetaucht wird, wobei beim Austauchen die Schicht ausgebildet wird. Alternativ oder zusätzlich kann ein Glaskörper noch mit einer, insbesondere mehrlagigen, interferometrischen Beschichtung als zusätzlicher Beschichtung 4 versehen werden, welche das Reflexions- und/oder Transmissionsvermögen des Glaskörpers 1 modifizieren kann: so sind beispielsweise Verspiegelungsbeschichtungen, welche dem Glaskörper ein gewünschtes Reflexionsverhalten verleihen, und Entspiegelungsbeschichtungen, welche (störende bzw. ungewünschte) Reflexionserscheinungen unterdrücken, als zusätzliche Beschichtung(en) 4 hinreichend bekannt. Insbesondere solche interferometrischen Beschichtungen werden in der Regel in entsprechenden Vakuumbeschichtungsanlagen unter Vakuumbedingungen durch ein Verfahren der physikalische Gasphasenabscheidung oder der Sputter-Beschichtung aufgebracht.

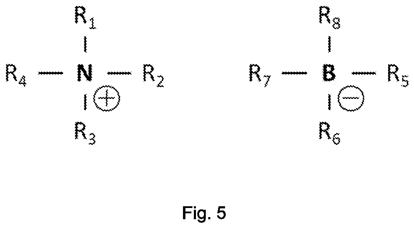

Figur 5 zeigt eine Strukturdarstellung bzw. Formel einer Ausführungsform eines Photobasengenerators. Photobasengeneratoren stellen eine Stoffklasse dar, welche sich dadurch auszeichnet, dass diese bei Bestrahlung mit Licht, insbesondere bei Bestrahlung mit UV-Licht, eine katalytisch aktiven Spezies freisetzen, insbesondere zumindest ein katalytisch aktives Amin, welches in einem Polymerisationsprozess die Reaktion von monomeren Komponenten, bevorzugt von Isocyanaten und Isocyanat-reaktiven Komponenten, insbesondere Thiolen, aber auch von Vorpolymerisaten mit entsprechenden reaktiven Gruppen, insbesondere von NCO- bzw. SH- und/oder OH-Gruppen, ohne zusätzliche thermische Energiezufuhr ermöglicht. Aufgrund der guten Löslichkeit in den Isocyanat Komponenten bzw. Isocyanat-reaktiven, insbesondere Thiol-, Komponenten der Mischung sind Ammoniumsalze von Tetraarylboraten bevorzugt als Photobasengeneratoren geeignet, insbesondere solche Salze mit Ammoniumionen, welche einen vierfach substituierten Stickstoff enthalten, wovon drei Reste unabhängig voneinander im Wesentlichen Alkylgruppen aufweisen und der übrige Rest im Wesentlichen Wasserstoff aufweist. In einer bevorzugten Ausführungsform ist der Photobasegenerator ein Ammonium-Tetraarylboratsalz eines tertiären Amins gemäß der Formel aus Figur 3,
wobei die Reste R₁, R₂ und R₃ jeweils unabhängig voneinander unsubstituierte oder monosubstituierte (C₁-C₂₀)-Alkyl-Reste darstellen, wobei der Substituent aus Fluor, Chlor, Brom, einem Phenyl-Rest, einem Hydroxy-Rest, einem (C₁-C₄)-Alkoxy-Rest oder einem Polyoxyalken-Rest, wobei hier die Alkyleneinheit 2 bis 4 Kohlenstoffatome aufweist und die sich wiederholende Einheit n zwischen 1 und 20 liegt, ausgewählt sein kann;
wobei der Rest R₄ im Wesentlichen Wasserstoff darstellt;
wobei die Reste R₅, R₆, R₇ und R₈ jeweils unabhängig voneinander Phenyl-Reste darstellen, welche zwischen null und vier Substituenten aufwiesen, oder Naphthyl-Reste darstellen, welche zwischen null und zwei Substituenten aufweisen, wobei die Substituenten aus Fluor, Chlor, Brom, einem Phenyl-Rest, einem (C₁-C₄)-AlkylRest, einem (C₁-C₄)-Alkoxy-Rest oder einem Trifluormethyl-Rest ausgewählt sein können.

Vorzugsweise unterscheiden sich die Reste R₁, R₂, R₃ voneinander, d.h. sie sind unterschiedlich. In Abwandlung hiervon können sie vorzugsweise auch, insbesondere alle, zueinander identisch sein. In Weiterbildung hiervon können bevorzugt zwei oder drei Reste auch zusammen einen oder mehrere Zyklen ausbilden.

Vorzugsweise unterscheiden sich die Reste R₅, R₆, R₇ und R₈ voneinander, d.h. sie sind unterschiedlich. In Abwandlung hiervon können sie vorzugsweise auch, insbesondere alle, zueinander identisch sein.

Die Vielseitigkeit des vorgestellten Verfahrens soll abschließend beispielhaft an drei im Folgenden ausgeführten, den Umfang der Erfindung nicht beschränkenden, Ausführungsbeispielen erläutert werden.

Zunächst wurden als nicht limitierendes Beispiel zwei Vorpolymerisate bzw. Vorpolymere V1 und V2 hergestellt, welche für den Einsatz in einer polymerisierbaren Mischung geeignet waren. Die entsprechenden Zusammensetzungen der Vorpolymerisate V1 und V2 lassen sich Tabelle 1 entnehmen. Des Weiteren wurden verschiedene polymerisierbare, insbesondere photopolymerisierbare, Mischungen (siehe auch Tabelle 2) auf ihr Aushärteverhalten hin untersucht und es wurde eine Auswahl getroffen, um aus den (photo-)polymerisierbaren Mischungen, mithilfe eines Herstellungsverfahrens gemäß einem Aspekt dieser Anmeldung, für einen Einsatz als Kunststoffbrillengläser geeignete Halbzeuge bzw. Glaskörper herzustellen.

Aus Tabelle 1 wird ersichtlich, dass sich die Vorpolymerisate V1 und V2 insbesondere hinsichtlich der Anteile A und B unterscheiden, d. h. sie unterscheiden sich hinsichtlich des Anteils an Isocyanat Komponenten, ausdrückt durch den Anteil A, und hinsichtlich des Anteils an Isocyanat-reaktiven Komponenten, ausgedrückt durch den Anteil B. Mit anderen Worten kann man sagen, dass sich das Vorpolymerisat V1 insbesondere durch einen Überschuss an Isocyanat-reaktiven Komponenten und sich das Vorpolymerisat V2 insbesondere durch einen Überschuss der Isocyanat Komponenten auszeichnen.

Die Herstellung der Vorpolymerisate wird im Folgenden anhand von Vorpolymerisat V1 erläutert, wobei die Vorgehensweise exemplarisch ist und trivialerweise auf das Vorpolymerisat V2 adaptiert werden kann.

Zur Herstellung des Vorpolymerisates V1 wurde ein Reaktor bestückt mit 19 Anteilen 2,5-Bis(isocyanatomethyl)-bicyclo-[2.2.1]-heptan als bevorzugter Verbindung für eine bzw. die Isocyanat Komponente, 22.9 Anteilen Pentaerythrit-tetrakis-(3-mercapto-propionat) und 58.1 Anteilen an 4-(mercaptomethyl)-1,8-dimercapto-3,6-dithiaoctan als bevorzugten Verbindungen für eine bzw. die Isocyanat-reaktive Komponente und 0.01 Anteilen Dimethylzinndichlorid als bevorzugter Verbindung eines optionalen Metallkatalysators zur Beschleunigung der thermisch induzierten Vorpolymerisation des Vorpolymerisats. Die Komponenten wurden unter ständigem Rühren auf 80 °C erhitzt und bei dieser Temperatur für etwa 7 h weitergerührt. Das so erhaltene Vorpolymer V1 mit einem Überschuss an Thiolkomponenten (und somit Isocyanat-reaktiven Gruppen) stand nach dem Abkühlen auf Raumtemperatur für die Verwendung in einer polymerisierbaren Mischung zur Verfügung. Das Vorpolymerisat V2 wurde auf vergleichbare Weise hergestellt, wobei die Anteile entsprechend angepasst wurden.

Die ausgewählten, in Tabelle 2 aufgeführten, erfindungsgemäßen Beispiele M1-M12 (photo-)polymerisierbarer Mischungen wurden durch Vermischen der in Tabelle 2 aufgezeigten Komponenten in den angegebenen Verhältnissen bei Raumtemperatur erhalten. Der angegebene Photobasengenerator und optionale Additive wurden dafür zunächst in der jeweiligen Isocyanat Komponente der Mischung vorgelöst.

Die Aushärtung durch Bestrahlung mit (UV-)Licht wurde verfolgt und dokumentiert, unter Ausnutzung der dielektrischen Analyse. Mithilfe dieser dielektrischen Analyse kann die Aushärtung einer Polyadditions-Reaktion verfolgt werden, da der, an der Messelektrode gemessene, Widerstand mit zunehmender durchschnittlicher Molekülgroße ansteigt. Hierfür wurde ein Tropfen der photopolymerisierbaren Mischung auf eine DE Sensor-Kammelektrode aufgebracht, welche an ein Gelnorm PDET-1 angeschlossen war. Die Belichtung wurde mit einer Herolab UV-6 S/L Lampe (im 254 nm Modus, d. h. bei einer Wellenlänge von etwa 254 nm) in einem Abstand von etwa 14 mm zur Elektrode durchgeführt. Der bei der Aushärtung gemessene Anstieg des Widerstandes zeigte einen charakteristischen, insbesondere sigmoidalen, Verlauf. Der Wendepunkt dieser sigmoidalen Kurve ist in Tabelle 2 als Aushärtezeit angegeben. Die Mischungen M11 und M12 wurden hierbei hinsichtlich ihrer Aushärtedauer nicht untersucht, da es sich hierbei um Weiterbildung bereits hinsichtlich ihrer Aushärtedauer bereits charakterisierter Mischungen handelt, welche sich lediglich durch die Zugabe der jeweils genannten Additive von den bereits untersuchten Mischungen unterscheiden, wobei die zugegebenen Additive einen, insbesondere dem Fachmann bekannten, Einfluss auf die Aushärtedauer haben. Durch die unterschiedlichen Eigenschaften, insbesondere die unterschiedlichen UV-Absorptionseigenschaften, der jeweiligen Komponenten wurden Unterschiede in den Aushärtezeiten aufgezeichnet, wobei eine Aushärtung durch UV-Licht dennoch bei allen Mischungen erreicht werden konnte. Durch den Einsatz des Photosensitizers 9H-Thioxanthen-9-on konnte außerdem die Wellenlänge des zur Induzierung der Aushärtung benötigten Lichts von etwa 254 nm auf etwa 365 nm gesteigert werden, wodurch sich vorteilhafterweise eine größere Eindringtiefe des zur Induzierung verwendeten Lichts und damit verbunden eine homogenere Aushärtung erreichen lässt.

Der Erfindung liegt in Bezug auf die Vorpolymerisate V1 und V2 die überraschende Erkenntnis zugrunde, dass jene polymerisierbaren Mischungen, welche insbesondere durch Vermischung bzw. Vermengung mit einem der Vorpolymerisate V1 oder V2 gebildet wurden, d. h. die Mischungen M9 bis M12 der Tabelle 2, sich hinsichtlich der optischen Qualität des erhaltenen Glaskörpers deutlich von den übrigen Mischungen unterscheiden. Vorteilhafterweise ist daher vorzugsweise eine der Mischungen M9 bis M12, gebildet aus einem der Vorpolymerisate V1 oder V2, besonders zum Erhalt eines, bevorzugt durch Photopolymerisation gebildeten, Glaskörpers geeignet, welcher insbesondere für eine spätere Verwendung bzw. einen späteren Einsatz als Brillenglaslinse tauglich ist. Aus derart ausgewählten, insbesondere photo-, polymerisierbaren Mischungen wurden drei Beispielprodukte durch Anwendung eines Herstellungsverfahrens gemäß einem Aspekt der vorliegenden Anmeldung gebildet, welche in den folgenden Beispielen 1 bis 3 näher beschrieben werden.

**Tabelle 1: Übersicht der Zusammensetzung verschiedener Vorpolymerisate bzw. Vorpolymere**

| Vorpolymerisate bzw. Vorpolymer | Isocyanat-Komponente A | Isocyanat-reaktive Komponente B | Anteil A | Anteil B | Anteil Katalysator und Katalysator |
|---|---|---|---|---|---|
| V1 | 2,5-Bis(isocyanato-methyl)-bicyclo-[2.2.1]-heptan | Pentaerythrit-tetrakis-(3-mercapto-propionat) / 4-(Mercaptomethyl)-1,8-dimercapto-3,6-dithiaoctan | 19.0 | 22.9 / 58.1 | 0.01 Dimethylzinndichlorid |
| V2 | 2,5-Bis(isocyanato-methyl)-bicyclo-[2.2.1]-heptan | Pentaerythrit-tetrakis-(3-mercapto-propionat) / 4-(Mercaptomethyl)-1,8-dimercapto-3,6-dithiaoctan | 81.0 | 5.3 / 13.7 | 0.01 Dimethylzinndichlorid |

**Tabelle 2: Übersicht der Zusammensetzung verschiedener (photo-)polymerisierbarer Mischungen**

| Mischung | Isocyanat Komponente A | Isocyanat-reaktive Komponente B | Anteil A | Anteil B | Anteil Vorpolymerisat und Vorpolymerisat (vgl. Tabelle 1) | Anteil PBG und PBG | Anteil Additiv und Additiv | Aushärtedauer (Wellenlänge) |
|---|---|---|---|---|---|---|---|---|
| M1 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Triethyl-ammonium-tetraphenylborat | - | 8.8 min (254 nm) |
| M2 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Diisopropyl-ethylammoniumtetraphenylborat | - | 6.0 min (254 nm) |
| M3 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Dimethyl-cyclohexyl-tetraphenylborat | - | 7.9 min (254 nm) |
| M4 | 1,3-Bis(isocyanatomethyl)b enzol | 4,8-dimercaptomethyl-1,11-dimercapto-3,6,9-tri-thia-undecan | 50.5 | 49.5 | - | 0.25 Triethyl-ammonium-tetraphenylborat | - | 54.6 min (254 nm) |
| M5 | 1,6-Diisocyanatohexan | Pentaerythrit-tetrakis-(3-mercapto-propionat) | 40.8 | 59.2 | - | 0.25 Triethylammoniumtetraphenylborat | - | 2.7 min (254 nm) |
| M6 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Triethyl-ammonium-tetraphenylborat | 0.7 Photochromer Farbstoff | 72.2 min (254 nm) |
| M7 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Triethyl-ammonium-tetraphenylborat | 1.0 9H-Thioxanthen-9-on | 22.8 min (365 nm) |
| M8 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 50.6 | 23.9 / 25.5 | - | 0.25 Triethyl-ammonium-tetraphenylborat | 0.075 2-(2H-Benzotriazol-2-yl)-4-(1,1,3,3-tetramethylb utyl)phenol | 119 min (254 nm) |
| M9 | 2,5-Bis(isocyanatomethyl)-bicyclo-[2.2.1]-heptan | - | 38.3 | - | 61.7 V1 | 0.25 Triethyl-ammonium-tetraphenylborat | - | 144.7 min (254 nm) |
| M10 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 25.4 | 12.2 / 32.0 | 30.4 V2 | 0.25 Dimethyl-cyclohexyl-tetraphenylborat | - | 20.9 min (254 nm) |
| M11 | 2,5-Bis(isocyanatomethyl)-bicyclo-[2.2.1]-heptan | - | 34.5 | - | 55.9 V1 | 0.25 Triethyl-ammonium-tetraphenylborat | 0.7 Photochromer Farbstoff | - |
| M12 | 2,5-Bis(isocyanatomethyl)-bicyclo-[2.2.1]-heptan | Pentaerythrit-tetrakis-(3-mercapto-propionat) / 4-(mercaptomethyl)-1,8-dimercapto-3,6-dithiaoctan | 34.6 | 2.9 / 6.9 | 53.2 V1 | 0.25 Triethyl-ammonium-tetraphenylborat | 3.9 Photochromer Farbstoff | - |

### Beispiel 1 Herstellen eines Brillenglasgrundkörpers

Zum Erhalt eines Brillenglasgrundkörpers wurde ein Vorpolymerisat als Gemisch aus zumindest Isocyanat und Thiol gebildet, wobei das Vorpolymerisat einen Thiolüberschuss aufwies. Dem Vorpolymerisat wurde als bevorzugte weitere Additive mit einer Isocyanat-Komponente und mit Tetraarylboratsalz als einem bevorzugtem Photobasengenerator vermischt, um eine photopolymerisierbare Mischung zu erhalten.

Hierfür wurde zunächst die photopolymerisierbare Mischung M10 aus Tabelle 2, aufweisend 2,5-Bis(isocyanatomethyl)-bicyclo-[2.2.1]-heptan als bevorzugter Verbindung für die Isocyanat Komponente, Pentaerythrit-tetrakis-(3-mercapto-propionat) und 4-(Mercaptomethyl)-1,8-dimercapto-3,6-dithiaoctan als bevorzugter Verbindungen für die Isocyanat-reaktive Komponente, und als bevorzugtes Vorpolymerisat das Vorpolymerisat V2 aufweisend einen Überschuss der Isocyanat Komponente, und als bevorzugten Photobasengenerator Triethylammoniumtetraphenylborat, verwendet bzw. hergestellt. Das Triethylammoniumtetraphenylborat wurde hierfür zuerst in 2,5-Bis(isocyanatomethyl)-bicyclo-[2.2.1]-heptan gelöst bevor die restlichen Komponenten hinzugefügt wurden. Die Komponenten wurden mit einem Magnetrührer gründlich durchmischt, um eine photopolymerisierbare Mischung zu erhalten.

Die Form des späteren Brillenglasgrundkörpers wurde vorgegeben durch zwei Mineralglas-Formschalen (Quarzglas-Formschalen), auch als Gießformen bezeichnet, welche in ihrer Form jeweils das Negativabbild des späteren Brillenglases darstellten. Diese beiden Gießformen wurden beabstandet voneinander angeordnet, um einen Hohlraum in der Form des späteren Brillenglasgrundkörpers auszubilden. Die Oberflächen der Gießformen, welche die Innenseiten des Hohlraums ausbildeten, wurden zuvor mit einem Wasser- und Fettabweisenden Film beschichtet. Anschließend erfolgte das Befüllen des ausgebildeten Hohlraums mit der photopolymerisierbaren Mischung M10. Anschließend fand eine vollständige Aushärtung der Mischung statt, wobei diese Aushärtung mittels Bestrahlung mit UV-Licht stattfand. Das befüllte Gießpaket, bestehend aus den beiden Gießformen und der photopolymerisierbaren Mischung, wurde mit einer Herolab UV-6 S/L Lampe (254 nm Modus) im Abstand von etwa 25 mm für etwa 6 Stunden mit UV-Licht bestrahlt. Hierbei setzte durch Absorption des eingestrahlten UV-Lichts das eingesetzte Triethylammoniumtetraphenylborat die Base Triethylamin als eine Aminverbindung frei und induzierte somit die Polyadditionsreaktion der in der Mischung vorhandenen Isocyanat- und Thiolgruppen. Um die durch UV-Licht induzierte Aushärtung zu vervollständigen, wurde das Gießpaket anschließend für etwa 18 Stunden bei Raumtemperatur gelagert. Im Anschluss wurde die ausgehärtete Mischung von den Gießformen getrennt, um das sogenannte Halbzeug zu erhalten. Anschließend wurde das Halbzeug thermisch nachbehandelt, um einen gehärteten und spannungsfreien Glaskörper zu erhalten, wobei das Halbzeug hierfür für etwa zwei Stunden bei etwa 120 °C in einem Umluftofen platziert.

Auf diese Weise wurde mit dem vorgestellten Verfahren ein Glaskörper erzeugt, welcher anschließend weiterverarbeitet werden kann. Insbesondere wurde auf diese Weise ein Glaskörper erzeugt, welcher als Substrat in einer möglichen Weiterbildung dienen konnte.

### Beispiel 2 Herstellen eines photochromen Brillenglases

Zum Erhalt eines photochromen Brillenglases wurde zunächst ein Substrat bereitgestellt, wobei es sich hierbei um eine etwa 6 mm dicke Polythiourethanscheibe handelte. Das Substrat wurde zusammen mit einer Quarzglasformschale als bevorzugter Mineralglasformschale so beabstandet, dass sich zwischen Mineralglasformschale und Substrat ein geeigneter Hohlraum ausbildete, welcher die gewünschte Schichtdicke von etwa 0,3 mm aufwies, wobei diese Anordnung auch als Gießpaket bezeichnet wird. Die Oberfläche der Mineralglasformschale, welche die Innenseiten des Hohlraums ausbildete, wurden zuvor mit einem Wasser- und Fettabweisenden Film beschichtet. Als photopolymerisierbare Mischung wurde die Beispielmischung M11 aus Tabelle 2 bestehend aus 2,5-Bis(isocyanatomethyl)-bicyclo-[2.2.1]-heptan als bevorzugter Verbindung für die Isocyanat Komponente, dem Vorpolymerisat V1 als bevorzugtem Vorpolymerisat aufweisend einen Überschuss an Isocyanat-reaktiven Komponenten, Triethylammoniumtetraphenylborat als bevorzugtem Photobasengenerator und einem photochromen Naphthopyranfarbstoff verwendet. Das Triethylammoniumtetraphenylborat und der photochrome Naphthopyranfarbstoff wurden hierfür zuerst in 2,5-Bis(isocyanatomethyl)-bicyclo-[2.2.1]-heptan, gelöst bevor die restlichen, oben genannten, Komponenten hinzugefügt wurden. Die Komponenten wurden mit einem Magnetrührer gründlich durchmischt, um eine photopolymerisierbare Mischung zu erhalten. Die auf diese Weise erhaltene photopolymerisierbare Mischung wurde in den zuvor ausgebildeten Hohlraum zwischen Substrat und Mineralformschale gegeben. Anschließend fand eine Aushärtung der photopolymerisierbaren Mischung durch Bestrahlung mit UV-Licht statt, wobei dafür wurde das befüllte Gießpaket, bestehend aus dem Substrat, der Mineralglasformschale und der photopolymerisierbaren Mischung, mit einer Herolab UV-6 S/L Lampe (254 nm Modus) im Abstand von etwa 15 mm für etwa 1 Stunde mit UV-Licht bestrahlt wurde, um ein ausgehärtetes Halbzeug zu erhalten. Anschließend wurde das so erhaltene Halbzeug von der Mineralglasformschale getrennt und bei etwa 120 °C für etwa 2 Stunden in einem Umluftofen thermisch nachbehandelt, um einen gehärteten und spannungsfreien und insbesondere photochromen Glaskörper zu erhalten.

Auf diese Weise wurde mit dem vorgestellten Verfahren ein photochromer Glaskörper erzeugt, welcher insbesondere für eine spätere Verwendung als Brillenglas geeignet war.

### Beispiel 3 Herstellen eines photochromen Brillenglases

Eine etwa 3 mm dicke Polythiourethanscheibe wurde als geeignetes Substrat bereitgestellt und in einer Spincoating-Vorrichtung (Spincoater) platziert. Zum Erhalt bzw. zur Ausbildung bzw. zum Auftrag einer photochromen Schicht auf dem bereitgestellten Substrat wurde die Beispielmischung M12 aus Tabelle 2 verwendet, bestehend aus 2,5-Bis(isocyanatomethyl)-bicyclo-[2.2.1]-heptan als bevorzugter Verbindung für die Isocyanat Komponente, Pentaerythrit-tetrakis-(3-mercapto-propionat) und 4-(Mercaptomethyl)-1,8-dimercapto-3,6-dithiaoctan als bevorzugter Verbindungen für die Isocyanat-reaktive Komponente, Triethylammoniumtetraphenylborat als bevorzugtem Photobasengenerator, dem Vorpolymerisat V1 als bevorzugtem Vorpolymer aufweisend einen Überschuss an Isocyanat-reaktiven Komponenten und einem photochromen Farbstoff. Hierfür wurden der photochrome Farbstoff und das Triethylammoniumtetraphenylborat zuerst in 2,5-Bis(isocyanatomethyl)-bicyclo-[2.2.1]-heptan gelöst und anschließend die beiden Thiole und das Vorpolymer der Mischung hinzugefügt. Die Komponenten wurden mit einem Magnetrührer gründlich durchmischt, um eine photopolymerisierbare Mischung zu erhalten. Die photopolymerisierbare Mischung wurde auf das, bei etwa 600 Umdrehungen pro Minute rotierenden, Substrat in der Spincoatingvorrichtung aufgebracht, um eine photochrome Schicht mit einer Schichtdicke von etwa 40 µm auf dem Substrat auszubilden. Das so hergestellte Halbzeug aus Substrat und photochromer Schicht wurde durch Bestrahlung mit UV-Licht in ein Halbzeug mit ausgehärteter photochromer Schicht umgewandelt. Dafür wurde das Halbzeug, mit einer Herolab UV-6 S/L Lampe (254 nm Modus) im Abstand von etwa 15 mm für etwa 30 Minuten mit UV-Licht bestrahlt. Anschließend wurde das Halbzeug thermisch nachbehandelt, um einen gehärteten und spannungsfreien Glaskörper zu erhalten, wobei hierfür das Halbzeug für etwa 2 Stunden bei etwa 110 °C in einem Umluftofen platziert wurde.

Auf diese Weise wurde mit dem vorgestellten Verfahren ein photochromer Glaskörper erzeugt, insbesondere durch Aufbringen einer photopolymerisierbaren Mischung mittels Spin-Coating auf ein bereitgestelltes Substrat, wobei der hergestellte Glaskörper insbesondere für eine spätere Verwendung als Brillenglas geeignet war.

## Patentansprüche

1. Verfahren zur Herstellung eines Halbzeugs bzw. Glaskörpers aufweisend die folgenden Schritte:
- Bereitstellen eines zur Verwendung als Linse geeigneten Substrats (S100);
- Bereitstellen einer polymerisierbaren Mischung zum Erhalt eines Poly(thio-)urethans (S102), aufweisend eine Isocyanatkomponente und optional eine Thiolkomponente, wobei die polymerisierbare Mischung mindestens ein Poly(thio-)urethan Vorpolymerisat aufweist, ausgewählt aus:
- Poly(thio-)urethan Vorpolymerisat, hergestellt aus Isocyanaten und Isocyanat-reaktiven Komponenten, wobei das Verhältnis der Komponenten derart ist, dass ein Überschuss an Isocyanat-reaktiven Gruppen im Vergleich zu Isocyanat Gruppen vorliegt; und/oder
- Poly(thio-)urethan Vorpolymerisat, hergestellt aus Isocyanaten und Isocyanat-reaktive Komponenten, wobei das Verhältnis der Komponenten derart ist, dass ein Überschuss an Isocyanat Gruppen im Vergleich zu Isocyanat-reaktiven Gruppen vorliegt;
- Vermischen (S104) dieser polymerisierbaren Mischung mit mindestens einem weiteren Additiv, wobei dieses Additiv ein Photobasengenerator ist bzw. aufweist, zum Erhalt einer photopolymerisierbaren Mischung;
- Aufbringen (S106) der photopolymerisierbaren Mischung auf das Substrat;
- Aushärten (S108) der photopolymerisierbaren Mischung durch Belichten, insbesondere mittels UV-Licht, zum Ausbilden eines Halbzeugs bzw. Glaskörpers,
wobei der Photobasengenerator während des Belichtens eine Aminverbindung freisetzt, welche die Polyaddition der Isocyanate mit den Isocyanat-reaktiven Komponenten katalysiert;
wobei zumindest eine Isocyanat Komponente Isophorondiisocyanat, 2,5-Bis(isocyanatomethyl)-bicyclo-[2.2.1]-heptan, 4,4'-Diphenylmethandiisocyanat, 4,4'-Dicyclohexanmethandiisocyanat, Toluoldiisocyanat, Xylendiisocyanat, Hexamethylendiisocyanat, 1,3-Bis(isocyanatomethyl)benzol ist bzw. aufweist.

2. Verfahren nach Anspruch 1, wobei die polymerisierbare Mischung zumindest eine der folgenden Komponenten aufweist:
- mindestens einen photochromen Farbstoff; und/oder
- mindestens einen Farbstoff; und/oder
- mindestens einen UV-Absorber; und/oder
- mindestens einen Photosensitizer; und/oder
- mindestens einen Metallkatalysator; und/oder
- mindestens ein Oberflächenadditiv.

3. Verfahren nach Anspruch 1 oder 2, wobei:
- das Aufbringen der (photo-)polymerisierbaren Mischung durch Spin-Coating oder durch Anguss erfolgt; und/oder
- nach der Bestrahlung mit Licht, insbesondere mit UV-Licht eine zusätzliche, thermische Aushärtung der Mischung erfolgt.

4. Verfahren nach einem der vorangegangenen Ansprüche, wobei das Bereitstellen des Substrats das Ausbilden des Substrats umfasst, aufweisend die folgenden Schritte:
- Anordnen von zwei Formschalen als Negativabbild der Form bzw. Geometrie des auszubildenden Substrats; und
- Bereitstellen einer polymerisierbaren Substratmischung
- Einbringen bzw. Eingießen der polymerisierbaren Substratmischung in den zwischen den beabstandet angeordneten Formschalen ausgebildeten Hohlraum; und
- Aushärten der polymerisierbaren Substratmischung.

5. Verfahren nach Anspruch 4, wobei:
- das Aushärten der photopolymerisierbaren Substrat-Mischung durch Belichten erfolgt, insbesondere mittels UV-Licht; und/oder
- nach der Bestrahlung mit Licht, insbesondere mit UV-Licht eine zusätzliche, thermische Aushärtung der Substratmischung erfolgt.

6. Verfahren nach einem der vorangegangenen Ansprüche, wobei der Photobasengenerator ein Ammoniumsalz, bevorzugt ein Ammoniumsalz von Tetraarylboraten, ist.

7. Verfahren nach einem der vorangegangenen Ansprüche, wobei der Photobasengenerator aus einem Ammonium-Tetraarylboratsalz eines tertiären Amins gemäß Formel (I) ausgewählt ist: 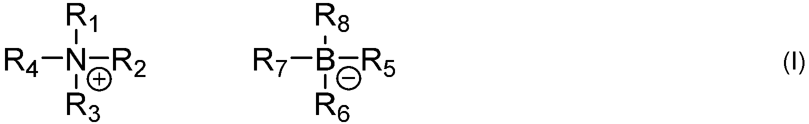
wobei die Reste R₁, R₂ und R₃ jeweils unabhängig voneinander unsubstituierte oder monosubstituierte (C₁-C₂₀)-Alkyl-Reste darstellen, wobei der Substituent aus Fluor, Chlor, Brom, einem Phenyl-Rest, einem Hydroxy-Rest, einem (C₁-C₄)-Alkoxy-Rest oder einem Polyoxyalken-Rest, wobei hier die Alkyleneinheit 2 bis 4 Kohlenstoffatome aufweist und die sich wiederholende Einheit n zwischen 1 und 20 liegt, ausgewählt sein kann;
wobei der Rest R₄ im Wesentlichen Wasserstoff darstellt;
wobei die Reste R₅, R₆, R₇ und R₈ jeweils unabhängig voneinander Phenyl-Reste darstellen, welche zwischen null und vier Substituenten aufwiesen, oder Naphthyl-Reste darstellen, welche zwischen null und zwei Substituenten aufweisen, wobei die Substituenten aus Fluor, Chlor, Brom, einem Phenyl-Rest, einem (C₁-C₄)-Alkyl-Rest, einem (C₁-C₄)-Alkoxy-Rest oder einem Trifluormethyl-Rest ausgewählt sein können.

8. Verfahren nach einem der vorgegangenen Ansprüche, wobei das Verfahren zusätzlich noch zumindest einen der folgenden Schritte aufweist:
- Thermisches Nachbehandeln (S110) des Halbzeugs zum Erhalt eines Glaskörpers; und/oder
- Ausbilden (S112) zumindest einer Beschichtung auf dem Glaskörper bzw. dem Halbzeug.

9. Photopolymerisierbare Mischung zum Erhalt eines Poly(thio-)urethans, aufweisend eine Isocyanatkomponente und optional eine Thiolkomponente, wobei die polymerisierbare Mischung mindestens ein Poly(thio-)urethan Vorpolymerisat aufweist, ausgewählt aus:
- ein Poly(thio-)urethan Vorpolymerisat, hergestellt aus Isocyanaten und Isocyanat-reaktiven Komponenten, wobei das Verhältnis der Komponenten derart ist, dass ein Überschuss an Isocyanat-reaktiven Gruppen im Vergleich zu Isocyanat Gruppen vorliegt;
und/oder
- ein Poly(thio-)urethan Vorpolymerisat, hergestellt aus Isocyanaten und Isocyanat-reaktive Komponenten, wobei das Verhältnis der Komponenten derart ist, dass ein Überschuss an Isocyanat Gruppen im Vergleich zu Isocyanat-reaktiven Gruppen vorliegt;
und wobei die Mischung zusätzlich zumindest einen Photobasengenerator aufweist, wobei der Photobasengenerator während des Belichtens eine Aminverbindung freisetzt, welche die Polyaddition der Isocyanate mit den Isocyanat-reaktiven Komponenten katalysiert, wobei zumindest eine Isocyanat Komponente Isophorondiisocyanat, 2,5-Bis(isocyanatomethyl)-bicyclo-[2.2.1]-heptan, 4,4'-Diphenylmethandiisocyanat, 4,4'-Dicyclohexanmethandiisocyanat, Toluoldiisocyanat, Xylendiisocynat, Hexamethylendiisocyanat, 1,3-Bis(isocyanatomethyl)benzol ist bzw. aufweist.

10. Photopolymerisierbare Mischung nach Anspruch 9, wobei:
- zumindest eine Isocyanat-reaktive Komponente bzw. Thiolkomponente Pentaerythrit-tetrakis-(3-mercapto-propionat), 4-(Mercaptomethyl)-1,8-dimercapto-3,6-dithiaoctan oder 4,8-dimercaptomethyl-1,11-dimercapto-3,6,9-trithiaundecan ist bzw. aufweist; und/oder
- zumindest eine Isocyanat Komponente ein Vorpolymerisat ist, gebildet aus Isocyanat Komponenten und Isocyanat-reaktiven Komponenten, aufweisend einen Überschuss an Isocyanatgruppen im Vergleich zu Isocyanat-reaktiven Gruppen; und/oder
- der Anteil der Isocyanat Komponenten im Vorpolymerisat so gewählt wurde, dass die in der Mischung vorhandenen Isocyanatgruppen bis 50 %, bevorzugt bis zu 30 %, der in der Mischung enthaltenen Isocyanat-reaktiven Gruppen entsprechen; und/oder
- zumindest eine Isocyanat-reaktive Komponente ein Vorpolymerisat ist, gebildet aus Isocyanat Komponenten und Isocyanat-reaktiven Komponenten, aufweisend einen Überschuss an Isocyanat-reaktiven Gruppen im Vergleich zu Isocyanatgruppen; und/oder
- der Anteil der Isocyanat-reaktiven Komponenten im Vorpolymerisat so gewählt wurde, dass die in der Mischung vorhandenen Isocyanat-reaktiven Gruppen bis 50 %, bevorzugt bis zu 30 %, der in der Mischung enthaltenen Isocyanatgruppen entsprechen.

11. Photopolymerisierbare Mischung nach einem der Ansprüche 9 bis 10, wobei die Mischung zumindest eine der folgenden Komponenten aufweist:
- mindestens einen photochromen Farbstoff; und/oder
- mindestens einen Farbstoff; und/oder
- mindestens einen UV-Absorber; und/oder
- mindestens einen Photosensitizer; und/oder
- mindestens einen Metallkatalysator; und/oder
- mindestens ein Oberflächenadditiv.

12. Photopolymerisierbare Mischung nach einem der Ansprüche 9 bis 11, wobei:
- zumindest ein Photobasengenerator Triethylammoniumtetraphenylborat, Diisopropylethylammonium-tetraphenylborat, Dimethylcyclohexyl-tetraphenylborat oder Dimethylcyclohexyl-tetraphenylborat ist bzw. aufweist, und/oder
- der Anteil des Photobasengenerators an der Mischung kleiner oder gleich 10 Anteilen, bevorzugt kleiner oder gleich 5 Anteilen, besonders bevorzugt kleiner oder gleich 1 Anteil, am meisten bevorzugt kleiner oder gleich 0.5 Anteilen, insbesondere genau 0.25 Anteilen ist bzw. entspricht.

13. Photopolymerisierbare Mischung nach einem der Ansprüche 9 bis 12, wobei der Photobasengenerator aus einem Ammonium-Tetraarylboratsalz eines tertiären Amins gemäß Formel (I) ausgewählt ist: 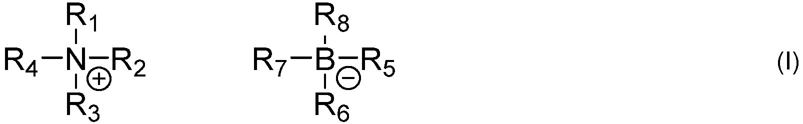
wobei die Reste R₁, R₂ und R₃ jeweils unabhängig voneinander unsubstituierte oder monosubstituierte (C₁-C₂₀)-Alkyl-Reste darstellen, wobei der Substituent aus Fluor, Chlor, Brom, einem Phenyl-Rest, einem Hydroxy-Rest, einem (C₁-C₄)-Alkoxy-Rest oder einem Polyoxyalken-Rest, wobei hier die Alkyleneinheit 2 bis 4 Kohlenstoffatome aufweist und die sich wiederholende Einheit n zwischen 1 und 20 liegt, ausgewählt sein kann;
wobei der Rest R₄ im Wesentlichen Wasserstoff darstellt;
wobei die Reste R₅, R₆, R₇ und R₈ jeweils unabhängig voneinander Phenyl-Reste darstellen, welche zwischen null und vier Substituenten aufwiesen, oder Naphthyl-Reste darstellen, welche zwischen null und zwei Substituenten aufweisen, wobei die Substituenten aus Fluor, Chlor, Brom, einem Phenyl-Rest, einem (C₁-C₄)-Alkyl-Rest, einem (C₁-C₄)-Alkoxy-Rest oder einem Trifluormethyl-Rest ausgewählt sein können.

14. Halbzeug, welches nach einem Verfahren gemäß einem der Ansprüche 1 bis 8 hergestellt ist.

15. Glaskörper, insbesondere Brillenglas, welcher aus einem Halbzeug gemäß Anspruch 14 hergestellt ist.

## Claims

1. A method for producing a semi-finished product or glass body comprising the following steps:
- providing a substrate (S100) suitable for use as a lens;
- providing a polymerizable mixture for obtaining a poly(thio)urethane (S102), comprising an isocyanate component and, optionally, a thiol component, wherein the polymerizable mixture comprises at least one poly(thio)urethane prepolymer selected from:
- a poly(thio)urethane prepolymer prepared from isocyanates and isocyanate-reactive components, wherein the ratio of the components is such that there is an excess of isocyanate-reactive groups relative to isocyanate groups; and/or
- a poly(thio)urethane prepolymer prepared from isocyanates and isocyanate-reactive components, wherein the ratio of the components is such that there is an excess of isocyanate groups relative to isocyanate-reactive groups;
- mixing (S104) this polymerizable mixture with at least one additional additive, wherein this additive is a photobase generator or comprises one, to obtain a photopolymerizable mixture;
- applying (S106) the photopolymerizable mixture to the substrate;
- curing (S108) the photopolymerizable mixture by exposure to light, in particular UV light, to form a semi-finished product or glass body,
wherein the photobase generator releases an amine compound during exposure, which catalyzes the polyaddition of the isocyanates with the isocyanate-reactive components;
wherein at least one isocyanate component is isophorone diisocyanate, 2,5-bis(isocyanatomethyl)-bicyclo-[2.2.1]-heptane, 4,4'-diphenylmethane diisocyanate, 4,4'-dicyclohexane methane diisocyanate, toluene diisocyanate, xylene diisocyanate, hexamethylene diisocyanate, or 1,3-bis(isocyanatomethyl)benzene.

2. A method according to claim 1, wherein the polymerizable mixture comprises at least one of the following components:
- at least one photochromic dye; and/or
- at least one dye; and/or
- at least one UV absorber; and/or
- at least one photosensitizer; and/or
- at least one metal catalyst; and/or
- at least one surface additive.

3. A method according to claim 1 or 2, wherein:
- the (photo-)polymerizable mixture is applied by spin coating or by casting; and/or
- after irradiation with light, in particular with UV light, the mixture undergoes additional thermal curing.

4. A method according to any of the preceding claims, wherein the step of providing the substrate comprises forming the substrate, comprising the following steps:
- arranging two mold shells as a negative image of the shape or geometry of the substrate to be formed; and
- providing a polymerizable substrate mixture
- Introducing or pouring the polymerizable substrate mixture into the cavity formed between the spaced-apart mold shells; and
- curing the polymerizable substrate mixture.

5. The method according to claim 4, wherein:
- the curing of the photopolymerizable substrate mixture is carried out by exposure to light, in particular UV light; and/or
- following irradiation with light, in particular with UV light, an additional thermal curing of the substrate mixture takes place.

6. A method according to any of the preceding claims, wherein the photobase generator is an ammonium salt, preferably an ammonium salt of tetraarylborates.

7. A method according to any of the preceding claims, wherein the photobase generator is selected from an ammonium tetraarylborate salt of a tertiary amine according to Formula (I): 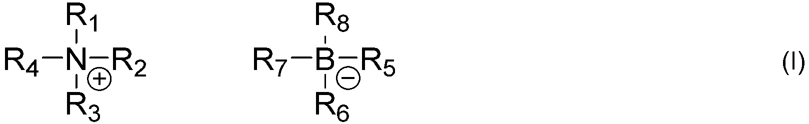
wherein the radicals R₁, R₂, and R₃each independently represent unsubstituted or monosubstituted (C₁-C₂₀)-alkyl radicals, wherein the substituent is selected from fluorine, chlorine, bromine, a phenyl group, a hydroxy group, a (C₁-C₄)-alkoxy group, or a polyoxyalkene group, wherein the alkylene unit has 2 to 4 carbon atoms and the number of repeating units n is between 1 and 20;
wherein the group R₄ essentially represents hydrogen;
wherein the radicals R₅, R₆, R₇, and R₈ each independently represent phenyl radicals having between zero and four substituents, or naphthyl radicals having between zero and two substituents, wherein the substituents may be selected from fluorine, chlorine, bromine, a phenyl group, a (C₁-C₄)-alkyl group, a (C₁-C₄)-alkoxy group, or a trifluoromethyl group.

8. A method according to any of the preceding claims, wherein the method further comprises at least one of the following steps:
- thermal post-treatment (S110) of the semi-finished product to obtain a glass body; and/or
- forming (S112) at least one coating on the glass body or the semi-finished product.

9. A photopolymerizable mixture for producing a poly(thio)urethane, comprising an isocyanate component and, optionally, a thiol component, wherein the polymerizable mixture comprises at least one poly(thio)urethane prepolymer selected from:
- a poly(thio)urethane prepolymer prepared from isocyanates and isocyanate-reactive components, wherein the ratio of the components is such that there is an excess of isocyanate-reactive groups relative to isocyanate groups;
and/or
- a poly(thio)urethane prepolymer prepared from isocyanates and isocyanate-reactive components, wherein the ratio of the components is such that there is an excess of isocyanate groups relative to isocyanate-reactive groups;
and wherein the mixture additionally comprises at least one photobase generator, wherein the photobase generator releases an amine compound during exposure, which catalyzes the polyaddition of the isocyanates with the isocyanate-reactive components , wherein at least one isocyanate component is isophorone diisocyanate, 2,5-bis(isocyanatomethyl)-bicyclo[2.2.1]heptane, 4,4'-diphenylmethane diisocyanate, 4,4'-dicyclohexane methane diisocyanate, toluene diisocyanate, xylene diisocyanate, hexamethylene diisocyanate, or 1,3-bis(isocyanatomethyl)benzene.

10. A photopolymerizable mixture according to claim 9, wherein:
- at least one isocyanate-reactive component or thiol component is pentaerythritol tetrakis(3-mercapto-propionate), 4-(mercaptomethyl)-1,8-dimercapto-3,6-dithiaoctane, or 4,8-dimercaptomethyl-1,11-dimercapto-3,6,9-trithiaundecane; and/or
- at least one isocyanate component is a prepolymer formed from isocyanate components and isocyanate-reactive components, comprising an excess of isocyanate groups relative to isocyanate-reactive groups; and/or
- the proportion of isocyanate components in the prepolymer has been selected such that the isocyanate groups present in the mixture correspond to up to 50%, preferably up to 30%, of the isocyanate-reactive groups contained in the mixture; and/or
- at least one isocyanate-reactive component is a prepolymer formed from isocyanate components and isocyanate-reactive components, having an excess of isocyanate-reactive groups relative to isocyanate groups; and/or
- the proportion of isocyanate-reactive components in the prepolymer has been selected such that the isocyanate-reactive groups present in the mixture correspond to up to 50%, preferably up to 30%, of the isocyanate groups contained in the mixture.

11. A photopolymerizable mixture according to any one of claims 9 through 10, wherein the mixture comprises at least one of the following components:
- at least one photochromic dye; and/or
- at least one dye; and/or
- at least one UV absorber; and/or
- at least one photosensitizer; and/or
- at least one metal catalyst; and/or
- at least one surface additive.

12. A photopolymerizable mixture according to any one of claims 9 through 11, wherein:
- at least one photobase generator is or comprises triethylammonium tetraphenylborate, diisopropylethylammonium tetraphenylborate, dimethylcyclohexyl tetraphenylborate, or dimethylcyclohexyl tetraphenylborate; and/or
- the proportion of the photobase generator in the mixture is less than or equal to 10 parts, preferably less than or equal to 5 parts, more preferably less than or equal to 1 part, most preferably less than or equal to 0.5 parts, and in particular exactly 0.25 parts.

13. A photopolymerizable mixture according to any one of claims 9 through 12, wherein the photobase generator is selected from an ammonium tetraarylborate salt of a tertiary amine according to Formula (I): 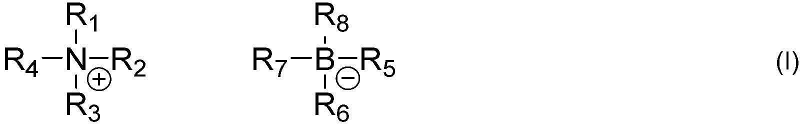
wherein the radicals R₁, R₂, and R₃each independently represent unsubstituted or monosubstituted (C₁-C₂₀)-alkyl radicals, wherein the substituent is selected from fluorine, chlorine, bromine, a phenyl group, a hydroxy group, a (C₁-C₄)-alkoxy group, or a polyoxyalkene group, wherein the alkylene unit has 2 to 4 carbon atoms and the number of repeating units n is between 1 and 20;
wherein the group R₄ essentially represents hydrogen;
wherein the radicals R₅, R₆, R₇, and R₈each independently represent phenyl radicals having between zero and four substituents, or naphthyl radicals having between zero and two substituents, wherein the substituents may be selected from fluorine, chlorine, bromine, a phenyl group, a (C₁ -C₄) alkyl group, a (C₁ -C₄) alkoxy group, or a trifluoromethyl group.

14. An intermediate product produced by a process according to any one of claims 1 through 8.

15. A glass article, in particular an eyeglass lens, produced from a semi-finished product according to claim 14.

## Revendications

1. Procédé de fabrication d'un produit semi-fini ou d'un corps en verre, comprenant les étapes suivantes:
- mise à disposition d'un substrat (S100) adapté à une utilisation en tant que lentille;
- mise à disposition d'un mélange polymérisable destiné à l'obtention d'un poly(thio)uréthane (S102), comprenant un composant isocyanate et, éventuellement, un composant thiol, le mélange polymérisable comprenant au moins un prépolymère de poly(thio)uréthane choisi parmi:
- un prépolymère de poly(thio-)uréthane préparé à partir d'isocyanates et de composants réactifs avec les isocyanates, le rapport des composants étant tel qu'il existe un excès de groupes réactifs avec les isocyanates par rapport aux groupes isocyanates; et/ou
- un prépolymère de poly(thio-)uréthane préparé à partir d'isocyanates et de composants réactifs aux isocyanates, le rapport des composants étant tel qu'il existe un excès de groupes isocyanates par rapport aux groupes réactifs aux isocyanates;
- Mélange (S104) de ce mélange polymérisable avec au moins un autre additif, cet additif étant un générateur de photobase, afin d'obtenir un mélange photopolymérisable;
- application (S106) du mélange photopolymérisable sur le substrat;
- durcissement (S108) du mélange photopolymérisable par exposition à la lumière, en particulier à la lumière UV, pour former un produit semi-fini ou un corps en verre,
le générateur de photobase libérant, pendant l'exposition, un composé aminé qui catalyse la polyaddition des isocyanates avec les composants réactifs aux isocyanates;
au moins un composant isocyanate étant le diisocyanate d'isophorone, le 2,5- le bis(isocyanatométhyl)-bicyclo-[2.2.1]-heptane, le diisocyanate de 4,4'-diphénylméthane, le diisocyanate de 4,4'-dicyclohexanométhane, le diisocyanate de toluène, diisocyanate de xylène, diisocyanate d'hexaméthylène, 1,3-bis(isocyanatométhyl)benzène.

2. Procédé selon la revendication 1, dans lequel le mélange polymérisable comprend au moins l'un des composants suivants:
- au moins un colorant photochrome; et/ou
- au moins un colorant; et/ou
- au moins un absorbeur d'UV; et/ou
- au moins un photosensibilisateur; et/ou
- au moins un catalyseur métallique; et/ou
- au moins un additif de surface.

3. Procédé selon la revendication 1 ou 2, dans lequel:
- l'application du mélange (photo-)polymérisable s'effectue par revêtement par centrifugation ou par coulée; et/ou
- après l'irradiation par la lumière, en particulier par la lumière UV, un durcissement thermique supplémentaire du mélange a lieu.

4. Procédé selon l'une des revendications précédentes, dans lequel la mise à disposition du substrat comprend la formation du substrat, comprenant les étapes suivantes :
- la mise en place de deux moules formant une image négative de la forme ou de la géométrie du substrat à former; et
- la mise à disposition d'un mélange de substrat polymérisable
- Introduire ou couler le mélange de substrat polymérisable dans la cavité formée entre les coques de moulage espacées; et
- Durcissement du mélange de substrat polymérisable.

5. Procédé selon la revendication 4, dans lequel :
- le durcissement du mélange de substrat photopolymérisable s'effectue par exposition à la lumière, en particulier à la lumière UV; et/ou
- après l'irradiation par la lumière, en particulier par la lumière UV, un durcissement thermique supplémentaire du mélange de substrat a lieu.

6. Procédé selon l'une des revendications précédentes, dans lequel le générateur de photobase est un sel d'ammonium, de préférence un sel d'ammonium de tétraarylborates.

7. Procédé selon l'une des revendications précédentes, dans lequel le générateur de photobase est choisi parmi un sel d'ammonium de tétraarylborate d'une amine tertiaire répondant à la formule (I): 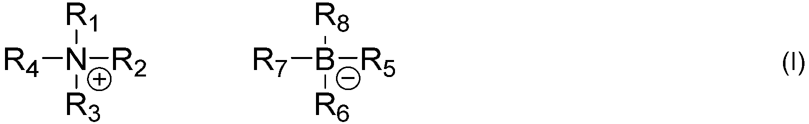
les radicaux R₁, R₂ et R₃ représentant chacun, indépendamment les uns des autres, des radicaux alkyle en C₁-C₂₀ non substitués ou monosubstitués, le substituant étant choisi parmi le fluor, le chlore, le brome, un radical phényle, un radical hydroxy, un radical alcoxy en (C₁-C₄) ou un radical polyoxyalcène, l'unité alkylène comportant ici 2 à 4 atomes de carbone et le nombre de motifs répétitifs n étant compris entre 1 et 20;
le radical R₄ représentant essentiellement un atome d'hydrogène;
les radicaux R₅, R₆, R₇ et R₈ représentant chacun, indépendamment les uns des autres, des radicaux phényle comportant entre zéro et quatre substituants, ou des radicaux naphtyle comportant entre zéro et deux substituants, les substituants pouvant être choisis parmi le fluor, le chlore, le brome, un radical phényle, un radical alkyle en (C₁-C₄)-alkyle, un radical (C₁-C₄)-alcoxy ou un radical trifluorométhyle.

8. Procédé selon l'une des revendications précédentes, ledit procédé comprenant en outre au moins l'une des étapes suivantes:
- un post-traitement thermique (S110) du produit semi-fini pour obtenir un corps en verre; et/ou
- la formation (S112) d'au moins un revêtement sur le corps en verre ou le produit semi-fini.

9. Mélange photopolymérisable destiné à l'obtention d'un poly(thio)uréthane, comprenant un composant isocyanate et, éventuellement, un composant thiol, le mélange photopolymérisable comprenant au moins un prépolymère de poly(thio)uréthane choisi parmi:
- un prépolymère de poly(thio-)uréthane préparé à partir d'isocyanates et de composants réactifs avec les isocyanates, le rapport des composants étant tel qu'il existe un excès de groupes réactifs avec les isocyanates par rapport aux groupes isocyanates;
et/ou
- un prépolymère de poly(thio)uréthane préparé à partir d'isocyanates et de composants réactifs vis-à-vis des isocyanates, le rapport des composants étant tel qu'il existe un excès de groupes isocyanates par rapport aux groupes réactifs vis-à-vis des isocyanates;
et le mélange comprenant en outre au moins un générateur de photobase, ce générateur de photobase libérant, pendant l'exposition, un composé aminé qui catalyse la polyaddition des isocyanates avec les composants réactifs aux isocyanates , au moins un composant isocyanate étant le diisocyanate d'isophorone, le diisocyanate d'isophorone, le 2,5-bis(isocyanatométhyl)-bicyclo-[2.2.1]-heptane, le diisocyanate de 4,4'-diphénylméthane, le diisocyanate de 4,4'-dicyclohexanométhane, le diisocyanate de toluène, le diisocyanate de xylène, le diisocyanate d'hexaméthylène, le 1,3-bis(isocyanatométhyl)benzène.

10. Mélange photopolymérisable selon la revendication 9, dans lequel :
- au moins un composant réactif avec les isocyanates ou un composant thiol, à savoir le tétrakis(3-mercapto-propionate) de pentaérythritol, le 4-(mercaptométhyl)-1,8-dimercapto-3,6-dithiaoctane ou le 4,8-dimercaptométhyl-1,11-dimercapto-3,6,9-trithiaundécane; et/ou
- au moins un composant isocyanate est un prépolymère formé à partir de composants isocyanates et de composants réactifs aux isocyanates, présentant un excès de groupes isocyanates par rapport aux groupes réactifs aux isocyanates; et/ou
- la proportion des composants isocyanates dans le prépolymère a été choisie de telle sorte que les groupes isocyanates présents dans le mélange correspondent à 50 %, de préférence jusqu'à 30 %, des groupes réactifs vis-à-vis des isocyanates contenus dans le mélange; et/ou
- au moins un composant réactif aux isocyanates est un prépolymère formé à partir de composants isocyanates et de composants réactifs aux isocyanates, présentant un excès de groupes réactifs aux isocyanates par rapport aux groupes isocyanates; et/ou
- la proportion des composants réactifs vis-à-vis des isocyanates dans le prépolymère a été choisie de telle sorte que les groupes réactifs vis-à-vis des isocyanates présents dans le mélange correspondent à 50 %, de préférence jusqu'à 30 %, des groupes isocyanates contenus dans le mélange.

11. Mélange photopolymérisable selon l'une des revendications 9 à 10, le mélange comprenant au moins l'un des composants suivants :
- au moins un colorant photochrome; et/ou
- au moins un colorant; et/ou
- au moins un absorbeur d'UV; et/ou
- au moins un photosensibilisateur; et/ou
- au moins un catalyseur métallique; et/ou
- au moins un additif de surface.

12. Mélange photopolymérisable selon l'une des revendications 9 à 11, dans lequel :
- au moins un générateur de base photochimique est ou comprend du tétraphénylborate de triéthylammonium, du tétraphénylborate de diisopropyléthylammonium, du tétraphénylborate de diméthylcyclohexyle ou du tétraphénylborate de diméthylcyclohexyle; et/ou
- la proportion du générateur de photobassin dans le mélange est inférieure ou égale à 10 parties, de préférence inférieure ou égale à 5 parties, de manière particulièrement préférée inférieure ou égale à 1 partie, de manière encore plus préférée inférieure ou égale à 0,5 partie, et en particulier exactement 0,25 partie.

13. Mélange photopolymérisable selon l'une des revendications 9 à 12, dans lequel le générateur de photobase est choisi parmi un sel de tétraarylborate d'ammonium d'une amine tertiaire répondant à la formule (I): 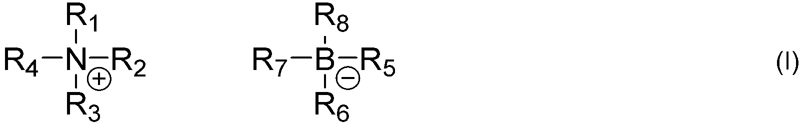
dans laquelle les radicaux R₁, R₂ et R₃ représentent chacun, indépendamment les uns des autres, des radicaux alkyle en (C₁-C₂₀) non substitués ou monosubstitués, le substituant étant choisi parmi le fluor, le chlore, le brome, un radical phényle, un radical hydroxy, un radical (C₁-C₄) ou un radical polyoxyalcène, l'unité alkylène comportant ici 2 à 4 atomes de carbone et le nombre de motifs répétitifs n étant compris entre 1 et 20;
le radical R₄ représentant essentiellement un atome d'hydrogène;
les radicaux R₅, R₆, R₇ et R₈ représentant chacun, indépendamment les uns des autres, des radicaux phényle comportant entre zéro et quatre substituants, ou des radicaux naphtyle comportant entre zéro et deux substituants, les substituants pouvant être choisis parmi le fluor, le chlore, le brome, l', un radical phényle, un radical alkyle en (C₁₋C₄)-alkyle, un radical (C₁-C₄)-alcoxy ou un radical trifluorométhyle.

14. Produit semi-fini fabriqué selon un procédé conforme à l'une des revendications 1 à 8.

15. Verre, en particulier verre de lunettes, fabriqué à partir d'un produit semi-fini selon la revendication 14.
